# EUROPEAN PATENT SPECIFICATION

(11) **EP 3 286 879 B1**
(45) Date of publication and mention of the grant of the patent: **21.11.2018**
(21) Application number: 16718641.0
(22) Date of filing: 20.04.2016
(51) Int. Cl.: H04L 12/24, H04W 88/06

(54) **NETWORK-BASED POLICY CONTROL FOR HYBRID ACCESSES**
NETZWERKBASIERTES RICHTLINIENSTEUERUNG FÜR HYBRIDE ZUGRIFFE
COMMANDE DE POLITIQUE BASÉE SUR UN RÉSEAU POUR DES ACCÈS HYBRIDES

(30) Priority: 20.04.2015 US 201562150001 P
(43) Date of publication of application: 28.02.2018
(73) Proprietor: Telefonaktiebolaget LM Ericsson (publ), 164 83 Stockholm (SE)
(72) Inventor: RIUS I RIU, Jaume, 175 45 Järfälla (SE); SINGHAL, Sumit, 37140Karlskrona (SE); KRISHNAN, Suresh, Suwanee, GA 30024 (US); RODRIGUES DE MOURA LEITAO, Filipe Alexandre, 69118 Heidelberg (DE)
(74) Representative: Ericsson
(86) International application number: PCT/EP2016/058790
(87) International publication number: WO 2016/170006

(56) References cited:
- EP-A1- 2 728 802
- WO-A1-2013/091705
- US-A1- 2012 044 862

## Description

### TECHNICAL FIELD

The present invention generally relates to network-based control of policies for hybrid fixed broadband access and mobile broadband access for end user service delivery; and, more specifically, the invention relates to coordination and synchronization of policies.

### BACKGROUND

Currently, the Hybrid Access for broadband networks is defined as the bonding of two heterogeneous access technologies, opening the way to new scenarios based on higher throughputs and increased network resilience. Operators with the Hybrid Access may provide extra capacity when instantaneous capacity demand exceeds capacity available through one access technology.

That is, the enhancement and consolidation of fixed access associated offers is the main purpose of the currently explored Hybrid Access. In this context, the customer premises can be materialized in residential or enterprise access gateways that mask network complexity and serving WAN accesses from the end users or services. All-in-all, the end user is agnostic about the access or path being used by the service's traffic, which is totally transparent to him.

Particularly related to Customer Premises Equipment (CPE), the currently existing TR-069 protocol, or CPE WAN Management Protocol (CWMP), is a standard device management protocol, standardized at Broadband Forum SDO (specifically in BBHome Working Group) and intended for communication between an auto-configuration server (ACS) and the CPE.

More recently, the Hybrid Access concept has been extended to use a mobile access technology in addition to the fixed access technology. By adding the mobile access in the equation, the operator is enhancing and complementing the network coverage in places where fixed access deployments are not mature, or where investment and evolution is not feasible (e.g. rural and remote areas). Even urban areas with mature fixed access deployments can benefit from this paradigm.

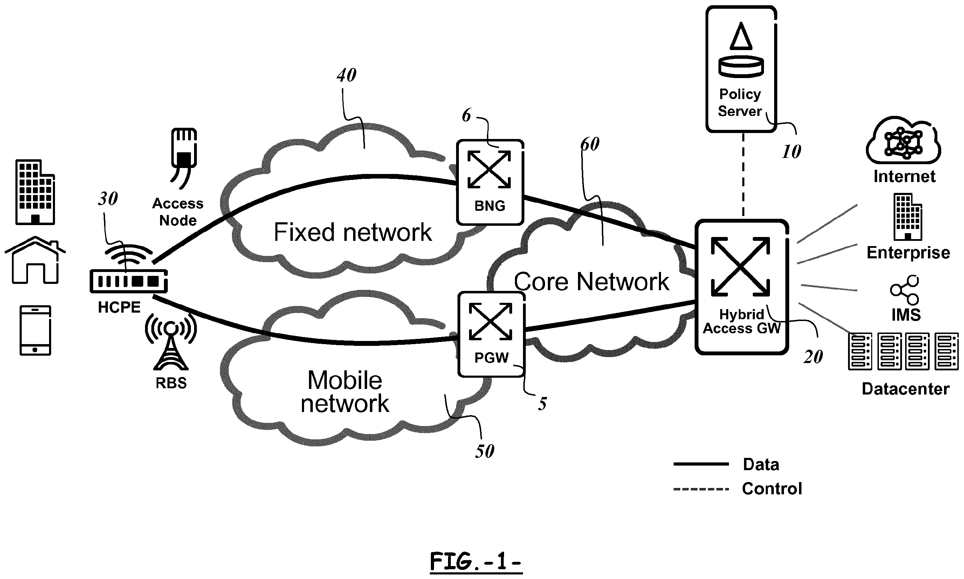

A basic high-level scenario for implementation of the Hybrid Access, as illustrated in Fig. 1, includes a Hybrid Access Customer Premises Equipment (HCPE), which can be a residential or enterprise gateway with two WAN links for each network access; a Hybrid Access Gateway (HAG), which may be placed in the packet core network to serve as central node for possible bonding and traffic distribution; and a Policy Controller in charge of controlling the remotely and dynamically oriented traffic distribution on the HCPE and HAG.

In this respect, deployment and implementation of an end-to-end Hybrid Access scenario depends on several aspects. For instance, the functional aspects associated with the logical HAG may be implemented in different network nodes and domains: in a PDN Gateway (PGW), if the traffic aggregation point is to be placed at the mobile network domain; in a Broadband Network Gateway (BNG), if the traffic aggregation point is to be placed at the fixed network domain; or as a stand-alone node.

Current solutions today, for aggregation and simultaneous use of fixed and mobile broadband access capacity by end users, address mechanisms and protocols covering the internet and transport layers. For example, WO 2014067711 A1 and also EP 2728802 A1 are apparently tailored for digital subscriber line (DSL) and 3GPP system and focus on tunnelling implementation.

Fewer solutions on this area address the possibility of aggregating fixed and mobile broadband access capacity by means of link layer protocols and mechanisms. For example, US 7990853 B2 apparently tailored for Gigabit Passive Optical Network (GPON) or WO 2013085485 A1 apparently focusing in IEEE WLAN technologies.

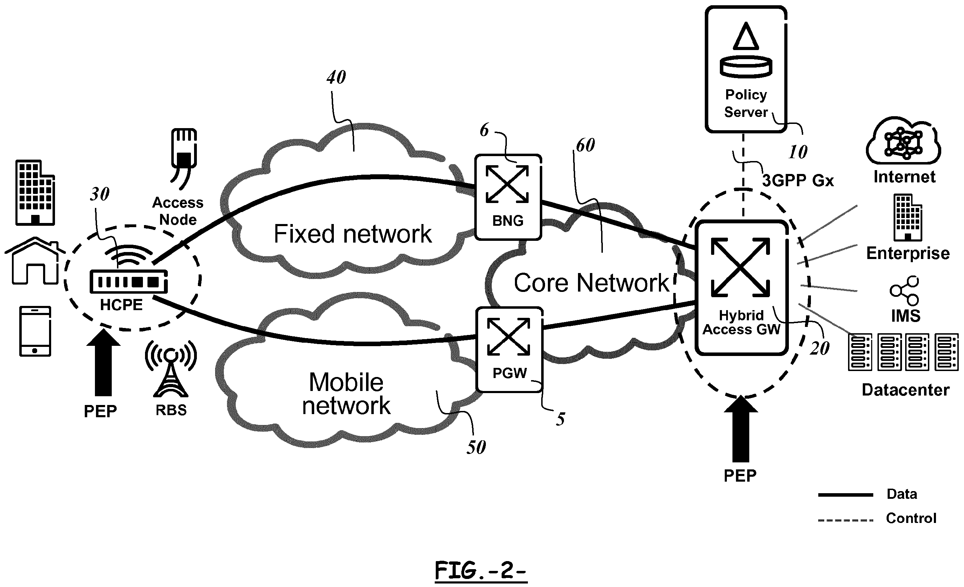

Most of currently existing solutions present two potential policy enforcement points (PEPs), as illustrated in Fig. 2, i.e. the hybrid access gateway (HAG) and the hybrid customer premises equipment (HCPE), wherein the network can enforce a policy control.

However, it is not clear in the prior art solutions, how the network coordinates the policy control between these two PEPs. In this respect, whilst a 3GPP Diameter Gx interface might be explored for a HAG policy setup, there is no parity for a HCPE policy setup.

### SUMMARY

The present invention is aimed to at least minimize the above drawbacks and provides for a method of controlling policies for accesses to a core network, through a fixed network and a mobile network, for a HCPE. In particular, the present invention provides for this method carried out by the HCPE, carried out by a policy server and carried out by a configuration server. Correspondingly, the present invention also provides for enhanced HCPE, policy server and configuration server respectively carrying out the above methods.

In accordance with a first aspect of the present invention, there is provided an overall method of controlling policies for accesses to a core network, through a fixed network and a mobile network, for a HCPE.

This method comprises: a step of establishing a communication session, by the HCPE with a network gateway, through at least one of the fixed network and the mobile network; a step of receiving, at a policy server from the network gateway, information about the communication session; and a step of transmitting, from the policy server to a configuration server, subscription data for the HCPE, the subscription data associated with a first policy to be applied at the HCPE to trigger traffic distribution at the HCPE.

This method also comprises: a step of obtaining, by the configuration server, the first policy associated with the subscription data and to be applied at the HCPE; a step of installing, from the configuration server to the HCPE, the first policy to trigger traffic distribution at the HCPE; a step of transmitting, from the HCPE to a HAG, traffic addressing the core network; a step of establishing a protocol session, by the HAG with the policy server, for the HCPE; and a step of installing, from the policy server to the HAG, a second policy to be applied at the HAG to trigger traffic distribution at the HAG.

In an embodiment, this method may further comprise transmitting from the policy server, and receiving at the configuration server, the first policy associated with the subscription data and to be applied at the HCPE. So that the configuration server directly obtains from the policy server this first policy associated with the subscription data.

In another embodiment, the first policy may be associated with the subscription data at a data repository, and the method may further comprise using the subscription data to obtain, at the configuration server from the data repository, the first policy associated with the subscription data.

Apart from the first policy to trigger traffic distribution at the HCPE and the second policy to trigger traffic distribution at the HAG, this method may further comprise installing, from the policy server to the network gateway, a third policy with redirection information indicating a HCPE traffic redirection towards the HAG, and whereby the traffic addressing the core network and received at the network gateway is redirected to the HAG.

Moreover, this method may still further comprise obtaining, by the configuration server, a fourth policy to be applied at the HCPE, and installing, from the configuration server, the fourth policy to the HCPE. In particular, this fourth policy may be any one of a further policy to trigger downlink traffic distribution at the HCPE and an update policy to update traffic distribution at the HCPE. Furthermore, this fourth policy may be obtained by the configuration server from the policy server or from the data repository.

In order to minimize the impacts of introducing the novel features of the present specification, any policy to trigger traffic distribution at the HCPE may be installed, from the configuration server to the HCPE, with a configuration message in accordance with a so-called TR-069 protocol or CWMP. Likewise, any transmission, from the policy server to the configuration server, may be carried out with a SOAP notification.

In accordance with a second aspect of the present invention, there is provided a method of controlling policies for accesses to a core network, through a fixed network and a mobile network, for a HCPE, the method carried out by the HCPE.

This method comprises: a step of establishing a communication session, by the HCPE with a network gateway, through at least one of the fixed network and the mobile network; a step of receiving from a configuration server, and enforcing at the HCPE, a policy to be applied at the HCPE to trigger traffic distribution at the HCPE; and a step of transmitting, to a HAG, traffic addressing the core network based on the received policy. In particular, the received policy may be enforced to trigger uplink traffic distribution at the HCPE.

Aligned with the overall method discussed above, this method may further comprise receiving from the configuration server, and enforcing at the HCPE, a further policy to be applied at the HCPE to trigger downlink traffic distribution at the HCPE.

In order to provide more flexibility, this method may further comprise receiving from the configuration server, and enforcing at the HCPE, an update policy to update traffic distribution at the HCPE. In particular, the update policy may update any one of downlink and uplink traffic distribution at the HCPE.

In accordance with a third aspect of the present invention, there is provided a method of controlling policies for accesses to a core network, through a fixed network and a mobile network, for a HCPE, the method carried out by a policy server.

This method comprises: a step of receiving, at the policy server from a network gateway, information about a communication session established by the HCPE through at least one of the fixed network and the mobile network; a step of transmitting, from the policy server to a configuration server, subscription data for the HCPE, the subscription data associated with a first policy to be applied at the HCPE to trigger traffic distribution at the HCPE; a step of establishing a protocol session, between the policy server and a HAG, for the HCPE; and a step of installing, from the policy server to the HAG, a second policy to be applied at the HAG to trigger traffic distribution at the HAG.

Aligned with the overall method discussed above, in an embodiment, this method may further comprise transmitting, from the policy server to the configuration server, the first policy associated with the subscription data and to be applied at the HCPE. So that the configuration server directly obtains from the policy server this first policy associated with the subscription data. In another embodiment, the subscription data is transmitted from the policy server to obtain, at the configuration server from a data repository, the first policy to be applied at the HCPE and associated with the subscription data at the data repository.

Generally speaking in this method, the first policy may be generated by the policy server to trigger uplink traffic distribution at the HCPE, whereas the second policy may be installed to trigger downlink traffic distribution at the HAG.

Apart from the first policy to trigger traffic distribution at the HCPE and the second policy to trigger traffic distribution at the HAG, also this method may further comprise installing, from the policy server to the network gateway, a third policy with redirection information indicating a HCPE traffic redirection towards the HAG, and whereby the traffic addressing the core network and received at the network gateway is redirected to the HAG. In particular, this third policy may be installed to trigger uplink traffic distribution at the network gateway.

In accordance with a fourth aspect of the present invention, there is provided a method of controlling policies for accesses to a core network, through a fixed network and a mobile network, for a HCPE, the method carried out by a configuration server.

This method comprises: a step of receiving, from a policy server, subscription data for the HCPE, the subscription data associated with a policy to be applied at the HCPE to trigger traffic distribution at the HCPE; a step of obtaining, at the configuration server, the policy associated with the subscription data and to be applied at the HCPE; and a step of installing the policy, from the configuration server to the HCPE, to trigger traffic distribution at the HCPE.

In an embodiment aligned with methods discussed above, this method may further comprise receiving, from the policy server, the policy associated with the subscription data and to be applied at the HCPE. So that the configuration server directly obtains from the policy server this policy associated with the subscription data.

In another embodiment aligned with methods discussed above, the policy may be associated with the subscription data at a data repository and this method may further comprise using the subscription data to obtain, from the data repository, the policy to be applied at the HCPE and associated with the subscription data.

The obtained policy, directly from the policy server, from the data repository or locally configured at the configuration server, may be installed to trigger uplink traffic distribution at the HCPE.

Also aligned with methods discussed above, this method may further comprise installing to the HCPE, for enforcement therein, a further policy to be applied at the HCPE to trigger downlink traffic distribution at the HCPE. Moreover, in order to provide more flexibility, this method may further comprise installing to the HCPE, for enforcement therein, an update policy to update traffic distribution at the HCPE. In particular, the update policy may update any one of downlink and uplink traffic distribution at the HCPE.

In accordance with a fifth aspect of the present invention, there is provided a HCPE for accesses to a core network through a fixed network and a mobile network.

This HCPE, in an embodiment, may comprise at least one processor and at least one memory that stores processor-executable instructions, wherein the at least one processor interfaces with the at least one memory to execute the processor-executable instructions, whereby said HCPE is operable to: establish a communication session, by the HCPE with a network gateway via a transmitter and a receiver, through at least one of the fixed network and the mobile network; receive, from a configuration server via a receiver, a policy to be applied at the HCPE to trigger traffic distribution; enforce, with a processor, the policy to be applied at the HCPE; and transmit, to a HAG via the transmitter, traffic addressing the core network based on the received policy. In particular, this policy may be enforced to trigger uplink traffic distribution at the HCPE.

In this embodiment and aligned with methods discussed above, the HCPE may further be operable to receive, from the configuration server via the receiver, a further policy to be applied at the HCPE, and enforce with the processor the further policy. This further policy may be enforced with the processor to trigger downlink traffic distribution at the HCPE, or to update traffic distribution at the HCPE.

In accordance with another embodiment, the HCPE may comprise a traffic handler configured to establish a communication session with a network gateway, via the transmitter and the receiver, through at least one of the fixed network and the mobile network, and configured to transmit, to the HAG via the transmitter, traffic addressing the core network based on a policy received to trigger traffic distribution.

Also in accordance with this embodiment, the HCPE may comprise a policy handler configured to receive, from a configuration server via a receiver, a policy to be applied at the HCPE to trigger traffic distribution, and configured to enforce the policy to trigger traffic distribution. In particular, this policy may be enforced to trigger uplink traffic distribution at the HCPE.

Still in this embodiment, the policy handler may further be configured to receive, from the configuration server via the receiver, a further policy to be applied at the HCPE, and the policy handler may further be configured to enforce the further policy to trigger downlink traffic distribution at the HCPE, or to update traffic distribution at the HCPE.

In accordance with a sixth aspect of the present invention, there is provided a policy server for controlling policies for accesses by a HCPE to a core network through a fixed network and a mobile network.

This policy server, in an embodiment, may comprise at least one processor and at least one memory that stores processor-executable instructions, wherein the at least one processor interfaces with the at least one memory to execute the processor-executable instructions, whereby said policy server is operable to: receive, from a network gateway via a receiver, information about a communication session established by the HCPE through at least one of the fixed network and the mobile network; transmit, to a configuration server via a transmitter, subscription data for the HCPE, the subscription data associated with a first policy to be applied at the HCPE to trigger traffic distribution at the HCPE; establish, by a processor via the transmitter and the receiver, a protocol session with a HAG for the HCPE; and install, to the HAG via the transmitter, a second policy to be applied at the HAG to trigger traffic distribution at the HAG.

In this embodiment, the policy server may further be operable to transmit, to the configuration server via the transmitter, the first policy associated with the subscription data and to be applied at the HCPE.

In particular this first policy may be generated by the processor to trigger uplink traffic distribution at the HCPE. Also in particular, the second policy may be installed to trigger downlink traffic distribution at the HAG.

In this embodiment and aligned with methods discussed above, the policy server may further be operable to install, to the network gateway via the transmitter, a third policy with redirection information indicating a HCPE traffic redirection towards the HAG, and whereby the traffic addressing the core network and received at the network gateway is redirected to the HAG. In particular, this third policy may be installed to trigger uplink traffic distribution at the network gateway.

In accordance with another embodiment, the policy server may comprise a session handler configured to receive, from a network gateway via a receiver, information about a communication session established by the HCPE through at least one of the fixed network and the mobile network, and configured to establish, via the transmitter and the receiver, a protocol session, e.g. a Gx session, with a HAG for the HCPE.

Also in accordance with this embodiment, the policy server may comprise a policy handler configured to transmit, to a configuration server via a transmitter, subscription data for the HCPE, the subscription data associated with a first policy to be applied at the HCPE to trigger traffic distribution at the HCPE, and configured to install to the HAG, via the transmitter, a second policy to be applied at the HAG to trigger traffic distribution at the HAG.

Aligned with methods discussed above, in this embodiment the policy handler may further be configured to transmit, to the configuration server via the transmitter, the first policy associated with the subscription data and to be applied at the HCPE.

In particular, the first policy may be generated by the policy handler to trigger uplink traffic distribution at the HCPE. Also in particular, the second policy may be installed by the policy handler via the transmitter to trigger downlink traffic distribution at the HAG.

In this embodiment, the policy handler 157 may further be configured to install, to the network gateway via the transmitter, a third policy with redirection information indicating a HCPE traffic redirection towards the HAG, and whereby the traffic addressing the core network and received at the network gateway is redirected to the HAG. In particular, this third policy may be installed to trigger uplink traffic distribution at the network gateway.

In accordance with a seventh aspect of the present invention, there is provided a configuration server for controlling policies for accesses to a core network, through a fixed network and a mobile network, for a HCPE.

This configuration server, in an embodiment, may comprise at least one processor and at least one memory that stores processor-executable instructions, wherein the at least one processor interfaces with the at least one memory to execute the processor-executable instructions, whereby said configuration server is operable to: receive, from a policy server via a receiver, subscription data for the HCPE, the subscription data associated with a policy to be applied at the HCPE to trigger traffic distribution at the HCPE; obtain, by a processor, the policy associated with the subscription data and to be applied at the HCPE; and install, to the HCPE via a transmitter, the obtained policy to be applied at the HCPE to trigger traffic distribution at the HCPE.

In this embodiment and aligned with methods discussed above, the configuration server may further be operable to receive, from the policy server via the receiver, the policy associated with the subscription data and to be applied at the HCPE.

Alternatively in this embodiment and also aligned with methods discussed above, the policy may be associated with the subscription data at a data repository and the configuration server may further be operable to use the subscription data to obtain, by the processor from the data repository, the policy to be applied at the HCPE and associated with the subscription data at the data repository.

Generally speaking in this embodiment, the obtained policy may be installed to trigger uplink traffic distribution at the HCPE. Moreover, the configuration server may further be operable to install, to the HCPE via the transmitter, a further policy to be applied at the HCPE. This further policy may be installed to trigger downlink traffic distribution at the HCPE, or to update traffic distribution at the HCPE.

In accordance with another embodiment, the configuration server may comprise a policy handler configured to receive, from a policy server via a receiver, subscription data for the HCPE, the subscription data associated with a policy to be applied at the HCPE to trigger traffic distribution at the HCPE, and configured to install, to the HCPE via a transmitter, the obtained policy to be applied at the HCPE to trigger traffic distribution at the HCPE. In particular, the obtained policy may be installed by the policy handler to trigger uplink traffic distribution at the HCPE.

Also in this embodiment and aligned with methods discussed above, the policy handler may further be configured to receive, from the policy server via the receiver, the policy associated with the subscription data and to be applied at the HCPE. So that the policy handler may directly obtain this policy from the policy server.

Alternatively in this embodiment and also aligned with methods discussed above, the policy may be associated with the subscription data at a data repository and the configuration server may further comprise a subscription handler configured to use the subscription data to obtain, from the data repository, the policy to be applied at the HCPE and associated with the subscription data at the data repository.

Generally speaking in this embodiment, the policy handler may further be configured to install, to the HCPE via the transmitter, a further policy to be applied at the HCPE. This further policy may be installed to trigger downlink traffic distribution at the HCPE, or to update traffic distribution at the HCPE.

On the other hand, the invention may be practised by a number of computer programs, in accordance with an eighth aspect of the invention, the computer programs comprising instructions which, when executed on at least the number of processors, cause the number of processors to carry out the methods discussed above.
The scope of the invention is defined by the appended claims.

As used herein, the word "comprising" does not exclude the presence of other elements or steps than those listed and the words "a" or "an" preceding an element do not exclude the presence of a plurality of such elements. Further, any reference signs do not limit the scope of the claims; the invention may be at least in part implemented by means of both hardware and software; and several "means", "modules" or "units" may be represented by a same item of hardware. The embodiments described and mentioned throughout this specification are given as examples of the present invention and are not intended to limit the present invention.

### BRIEF DESCRIPTION OF THE DRAWINGS

The features, objects and advantages of the invention will become apparent by reading this description in conjunction with the accompanying drawings, in which:
FIG. 1 basically represents a basic high-level scenario for implementation of the Hybrid Access.
FIG. 2 shows possible policy enforcement points (PEP) in the basic high-level scenario for Hybrid Access illustrated in FIG. 1.
FIG. 3 shows a detailed architecture with an exemplary policy enforcement domain carrying out the functionality of a configuration server, a policy server and a HAG.
FIG. 4 shows a high level flow scheme to setup policies in the HCPE through the exemplary policy enforcement domain illustrated in FIG. 2.
FIG. 5a and Fig. 5b illustrate alternative configuration data that a policy server, such as a PCRF, may transmit to a configuration server, such as the ACS, for the latter to obtain a policy to be applied at the HCPE.
FIG. 6 shows a basic component structure of a HCPE in accordance with an embodiment.
FIG. 7 shows a basic component structure of a policy server in accordance with an embodiment.
FIG. 8 shows a basic component structure of a configuration server in accordance with an embodiment.
FIG. 9 illustrates an exemplary sequence of actions carried out for a network-initiated installation of policies at the HCPE, in accordance with an embodiment in which policy enforcement is exemplarily triggered when the mobile link is used to distribute traffic from the HCPE towards the core network.
FIG. 10 illustrates an overall method of controlling policies, in accordance with an embodiment, for accesses to a core network, through a fixed network and a mobile network, for the HCPE and irrespective of using the mobile link or the fixed link.
FIG. 11 shows a basic component structure of a HCPE in accordance with another embodiment.
FIG. 12 shows a basic component structure of a policy server in accordance with another embodiment.
FIG. 13 shows a basic component structure of a configuration server in accordance with another embodiment.

### DETAILED DESCRIPTION

The following describes currently preferred embodiments of enhanced HCPE, policy server and configuration server, as well as respective methods of controlling policies for accesses to a core network 60, through a fixed network 40 and a mobile network 50, for a hybrid customer premises equipment 3, 30, HCPE.

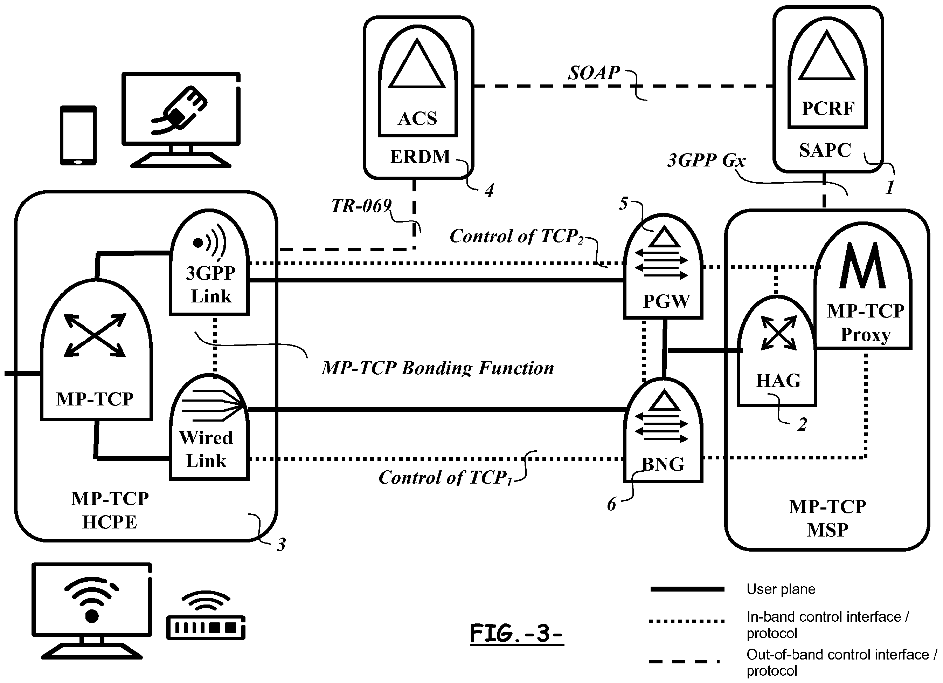

A detailed architecture and mechanisms for network-based policy control in a hybrid access scenario is further discussed with reference to Fig. 3. For the sake of simplicity in this discussion, it is assumed that the user plane is based on MP-TCP mechanisms, but it could be based in other link and transmission layer protocols and technologies.

Fig. 3 illustrates a HCPE 3, such as e.g. BelAir CPE + LTE dongle, enhancing the traditional wired connectivity with LTE connectivity, which is MP-TCP capable to bond and configure TCP flows in the uplink direction (but, again, any other user plane technology and protocol that can be policy controlled, could be used as well such as e.g. PPP, GRE tunneling, IP flows, etc.).

This HCPE 3 exemplary comprises a 3GPP link connected with a PGW 5, a wired link connected with a BNG 6, and the MP-TCP functionality. In particular, the 3GPP link is connected with the PGW 5 for both user plane and control of a TCP₂ flow, the latter carried out with an in-band control interface/protocol. Also in particular, the wired link is connected with the BNG 6 for both user plane and control of a TCP₁ flow, the latter carried out with an in-band control interface/protocol.

Fig. 3 also illustrates a configuration server, such as e.g. Ericsson Remote Device Manager (ERDM) 4 implementing an ACS, to be able to communicate with the HCPE the required MP-TCP control messages, via the so-called TR-069 protocol. The configuration server, e.g. ERDM 4, may communicate with a policy server, e.g. SAPC 1, via a Simple Object Access Protocol (SOAP). Both TR-069 and SOAP being an out-of-band control interface/protocol.

Fig. 3 also illustrates a policy server, such as e.g. a SAPC Ericsson product 1 implementing a Policy and Charging Rules Function (PCRF) of a Policy and Charging Control (PCC) architecture, and which is able to configure profiles and subscriptions both at the network side (HAG 2, exemplary implemented by MSP) and the HCPE 3 side (via ERDM 4, as highlighted above). In particular, this policy server, e.g. SAPC 1, may communicate with the configuration server, e.g. ERDM 4, via SOAP, and may communicate with the MSP implementing the HAG 2 via a 3GPP Gx interface, as described in 3GPP TS 29.212 V13.4.0 and TS 29.213 V13.4.0.

Fig. 3 also illustrates a HAG 2, which may be MP-TCP capable, such as the MSP, and which is is able to bond and configure the TCP flows in the downlink direction.

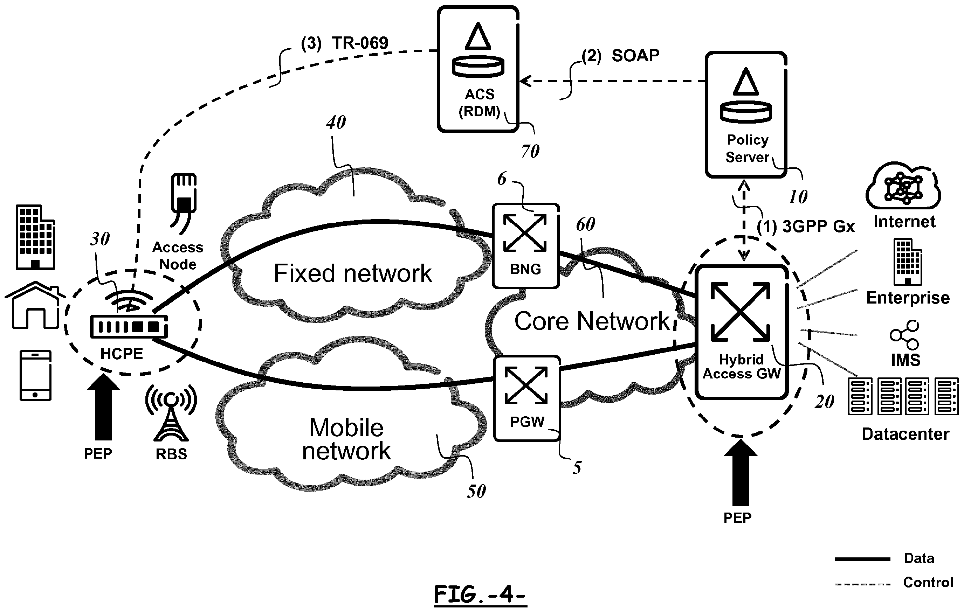

Fig. 4 shows a more general scenario than the one illustrated in Fig. 3 and illustrates a high-level flow scheme also applicable for the exemplary scenario shown in Fig. 2.

In this scenario, the policy enforcement domain includes a centralized policy server 10, which in Fig. 3 is implemented by the PCRF 1, and signaling interfaces (1) (2) (3) towards the HAG 20 and the HCPE 30. While the policy server interface towards the HAG can be based on existing signaling protocols, such as the 3GPP Diameter Gx disclosed in 3GPP TS 29.212, there is no similar interface that can be re-used between the policy server 10 and the HCPE 30.

However, since most of conventional CPE and residential gateways implement the TR-069 protocol, the inventors assume the HCPE 30 being TR-069 capable. This HCPE may thus be configured from the configuration server 70, e.g. ACS, through the TR-069 protocol (3). In this respect, in an operator domain, the ACS may be responsible for remotely configuring and controlling hundreds of CPEs.

The solution throughout this specification takes advantage of the wide implementation of T-069 protocol between the ACS and the HCPE, and extends the policy server 10 with an interface to the configuration server 70, so that policies can be transmitted from the policy server 10 to the HCPE 30 via the configuration server 70, e.g. ACS.

There are two main reasons for communicating policy details from the policy server: first, the policy server is maintaining, or has access to, subscriber information for hybrid access clients, i.e. the operator would have only one entry point of configuration for both the HAG and HCPE traffic distribution policies; a second reason is that the 3GPP access link establishment can be used as trigger for the HCPE policies provision.

As shown in Fig. 4, upon establishment of a communication session between the HCPE 30 and the HAG 20, a first action could be the establishment of a 3GPP Gx session, between the HAG and the policy server 10, for example, through the HCPE 3GPP link (e.g. LTE link session establishment). In this respect, a Gx session is generally established between a Policy and Charging Enforcement Function, PCEF, included in a gateway and a PCRF 1, which is an exemplary policy server 10, as disclosed in 3GPP TS 23.203 V13.5.1 and TS 29.212 V13.4.0, so that the HAG may include a complete PCEF as disclosed in the standards, or only selected functionality for the purpose of the invention. A second action could be the transmission of corresponding policies from the policy server 10 to the configuration server 70, e.g. ACS, using a SOAP interface. A third action could be the transmission of a corresponding TR-069 message from the configuration server 70, e.g. ACS, to the destination HCPE.

Regarding the transmission of policies from the policy server 10 to the configuration server 70, policies to trigger traffic distribution at the HCPE, different embodiments are foreseeable.

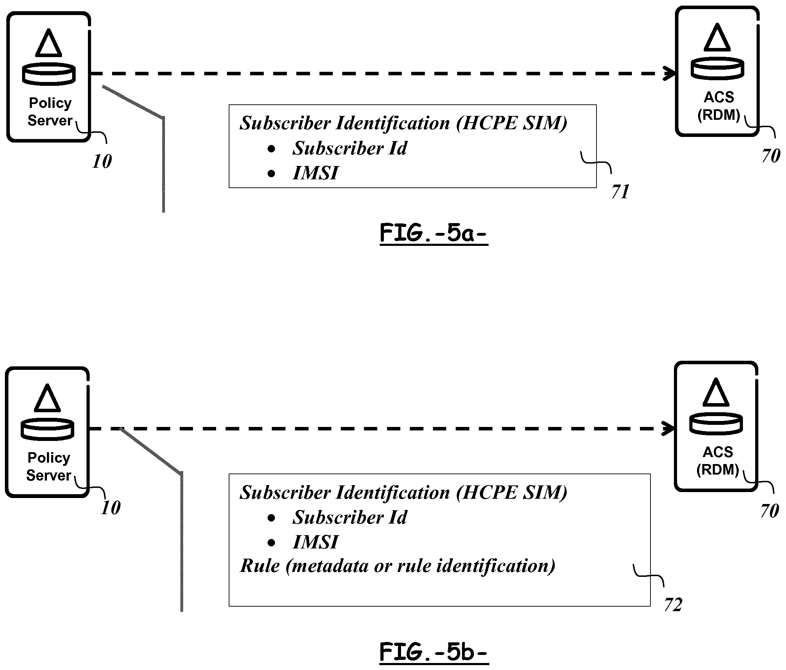

In an embodiment illustrated in Fig. 5a, the policy server 10, e.g. PCRF 1, may transmit subscription data 71, i.e. subscription identification details, for the HCPE 30 to the configuration server 70, e.g. ACS, and the latter may use that information to obtain the policy to trigger traffic distribution at the HCPE on its own database, or in an external database accessible to the configuration server. In particular these subscription data may comprise a subscriber identifier or an International Mobile Subscriber Identity (IMSI).

That is, in this embodiment, a policy is associated with the subscription data at a data repository, internal or external, and the configuration server 70 uses the subscription data 71 to obtain, from the data repository, the policy associated with the subscription data.

In an embodiment illustrated in Fig. 5b, the policy server 10 may transmit to the configuration server 70, e.g. ACS, along with the subscription data 72 for the HCPE 30 shown in Fig. 5a, a corresponding policy or policy identifier that the configuration server 70 may install to the HCPE 30 through the TR-069 interface. In particular, this policy or policy identifier may correspond to a rule or rule identifier. When a policy or rule identifier is transmitted to the HCPE, the latter identifies a particular policy or rule pre-defined in the HCPE and applies such pre-defined policy or rule.

That is, in this embodiment, the policy to trigger traffic distribution at the HCPE, which is associated with the subscription data, may be sent from the policy server 10 to the configuration server 70 along with the subscription data 72.

In other words, these two embodiments can be generalized by stating that the policy server 10 transmits to the configuration server 70 configuration data 71 or 72 to obtain a first policy to be applied at the HCPE in order to trigger traffic distribution at the HCPE. In the embodiment of Fig. 5b, the configuration data 72 comprises the policy to be applied at the HCPE and subscription data for the HCPE. In the embodiment of Fig. 5a, the configuration data 71 comprises subscription data for the HCPE, and the configuration server 70 uses the subscription data to obtain, from a data repository, the policy to be applied at the HCPE, policy which is associated with the subscription data at that data repository.

Irrespective of whether just the subscription data or both the subscription data and the policy to be applied at the HCPE are sent from the policy server 10 to the configuration server 70, the SOAP message sent to this end is preferably compliant with the standard defined by SOAP Version 1.2 Part 1: Messaging Framework, World Wide Web Consortium, 2007 (W3C).

The following messages or commands are proposed throughout this specification for possible interactions between the policy server 10, e.g. PCRF 1, and the configuration server 70, e.g. ACS, using the SOAP interface:

```
//SOAP XML message to add a subscriber. IMSI could be the key here.
<xs:element name="addSubscription" type="ns2:addSubscription"/>
  <xs:complexType name="addSubscription">
   <xs: annotation>
    <xs: documentation>
     <![CDATA[doc/lit request wrapper for operation "addSubscription".
         (Add a new subscription using the data from the provided subscription
         object. The subscription is associated with the specified subscription group.
         <p>
         NOTE: If the "IMSI" is used as subscription identifiers, this must be unique
         for the subscription. If the identifier is not unique, an exception will be
         thrown.)]]>
    </xs: documentation>
   </xs: annotation>
   <xs: sequence>
    <xs:element name="subscription" type="subscriptionInfo" minOccurs="0">
     <xs: annotation>
      <xs: documentation>
       <![CDATA[<i>[mandatory]</i> contains the data for the new
          subscription, including subscription attributes and services]]>
      </xs: documentation>
     </xs: annotation>
    </xs:element>
//SOAP XML message to add rules associated with a subcriber.
<xs:element name="addSubscriptionWithAttributes"
 type="ns2: addSubscriptionWithAttributes"/>
  <xs:complexType name="addSubscriptionWithAttributes">
   <xs: annotation>
    <xs: documentation>
     <![CDATA[doc/lit request wrapper for operation
        "addSubscriptionWithAttributes". (Add a new subscription with the specified
        attribute List. The subscription is associated with the specified subscription
        group.
        <p>
       NOTE: If the "IMSI" is used as subscription identifiers, this must be unique
        for the subscription. If the identifier is not unique, an exception will be
        thrown.
        <p>
       NOTE: This method is deprecated, it is recommended to use
        addSubscriptionAssociatedWithSubscriptionGroups)]]>
    </xs: documentation>
   </xs: annotation>
   <xs: sequence>
    <xs:element name="subscriptionAttributes" type="subscriptionAttribute"
    minOccurs="0" maxOccurs="unbounded">
     <xs: annotation>
      <xs: documentation>
       <![CDATA[<i>[mandatory]</i> the visible attributes that will be
          associated with the subscription.]]>
      </xs: documentation>
     </xs: annotation>
    </xs:element>
// SOAP XML for getting/reading rules information for a subscriber
<xs:element name="getAllSubscriptionGroupAttributes"
 type="ns2: getAllSubscriptionGroupAttributes"/>
  <xs:complexType name="getAllSubscriptionGroupAttributes">
   <xs: annotation>
    <xs: documentation>
     <! [CDATA[doc/lit request wrapper for operation
        "getAllSubscriptionGroupAttributes".]]>
    </xs: documentation>
   </xs: annotation>
   <xs: sequence/>
  </xs:complexType>
// SOAP XML for updating a subscription
<xs:element name="updateSubscription" type="ns2:updateSubscription"/>
  <xs:complexType name="updateSubscription">
   <xs: annotation>
    <xs: documentation>
     <![CDATA[doc/lit request wrapper for operation "updateSubscription".
        (Update the subscription with the specified subscription Attributes and
        services that are included in the specified subscription will be updated.)]]>
    </xs: documentation>
   </xs: annotation>
   <xs: sequence>
    <xs:element name="subscription" type="subscriptionInfo" minOccurs="0">
     <xs: annotation>
      <xs: documentation>
       <! [CDATA[<i>[mandatory]</i> contains the new data for the
         subscription]]>
      </xs: documentation>
     </xs: annotation>
    </xs:element>
```

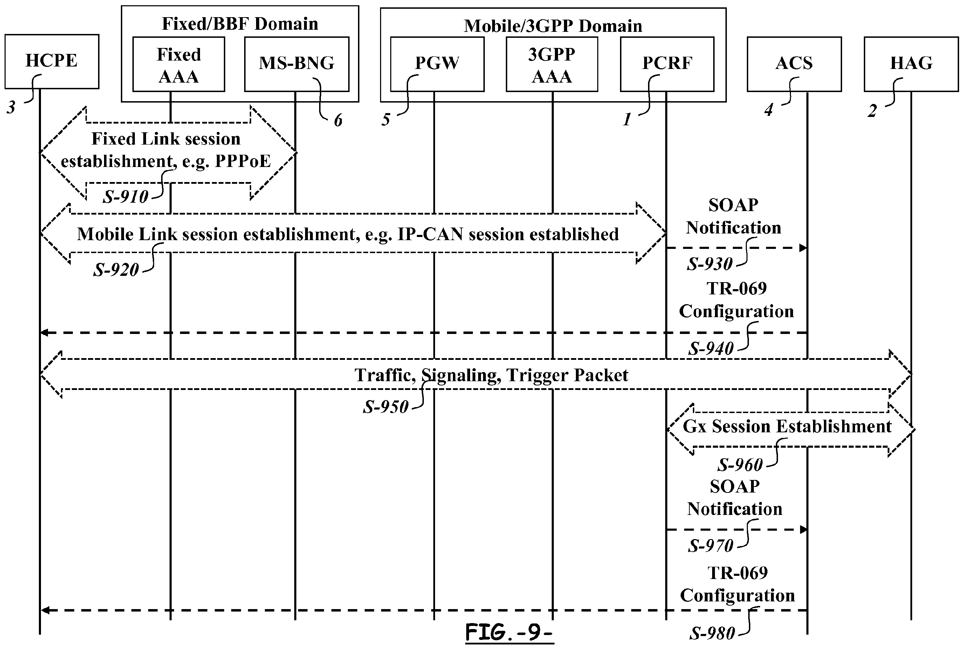

Once exemplary signaling flows, which involve the HAG, policy server, configuration server and HCPE, have been discussed above with reference to Fig. 3 and Fig. 4, and once alternative embodiments for the configuration server to obtain the policy to be applied at the HCPE have been discussed with reference to Fig. 5a and Fig. 5b, an overall exemplary method of controlling policies for accesses to a core network 60, through a fixed network 40 and a mobile network 50, for a HCPE 3, 30 is illustrated in Fig. 9.

This exemplary method, illustrated in Fig. 9, is carried out by a system fitting the scenarios shown in any one of Fig. 1 to Fig. 4 and is exemplarily based on the use of the 3GPP link to connect the HCPE 3 with the PGW 5 of the mobile network, as illustrated in Fig. 3.

As illustrated in Fig. 9, the HCPE 3 establishes a first communication session, e.g. PPPoE through the fixed network via the fixed link, with the BNG 6, during step S-910, and a second communication session, e.g. LTE IP-CAN through the mobile network via the mobile link, with the PGW 5, during step S-920. Further details for IP-CAN session establishment procedures can be found in section 4.1 of 3GPP TS 29.213.

In particular, as part of the IP-CAN session establishment flows, the PGW 5 requests PCC rules from the PCRF 1. During PCC rules decision by the PCRF, the PCRF may have obtained one or more provisioned rules associated with the subscription profile applicable for the request, to be installed at the PGW. Among those provisioned rules, the PCRF may install a rule with traffic redirection indication towards the HAG 2. This way selected traffic, e.g. TCP, may be redirected automatically to the HAG. Details about redirection of traffic from PGW 5 to HAG 2 may be found on 3GPP TS 29.212 and 3GPP TS 29.213.

During step S-930, the PCRF 1 transmits to the ACS 4 configuration data, with e.g. a SOAP notification, to trigger the corresponding remote HCPE configuration. This message may follow the communication details as presented above. In particular, the configuration data may be obtained by the PCRF 1 from data received in the request and/or from the subscription profile.

The SOAP message transmitted from the PCRF 1 to the ACS 4 comprises a subscription identification, e.g. IMSI, as illustrated in Fig. 5a and Fig. 5b, and it may also comprise corresponding dynamic or pre-defined policies, as illustrated in Fig. 5b, to be installed or configured at the HCPE 3. In the case of pre-defined policies, the PCRF only needs to transmit the corresponding policy identification that is to be activated.

For the sake of clarity, dynamic policies are those generated at the PCRF, whereas pre-defined policies are defined in a target entity and the PCRF simply activates them by providing the corresponding policy identifications to the target entity.

Upon receipt of the SOAP notification, the ACS 4 builds a corresponding TR-069 message and transmits it to the HCPE 3 during step S-940. During this process, if neither dynamic nor pre-defined policies were received from the PCRF, the ACS may select the corresponding policies to install using the received subscription identification.

With the mobile link session established, the HCPE 3 may start transmitting traffic to the network during step S-950. As indicated by the policies installed at PGW 5 during step S-920, the PGW 5 redirects traffic to the HAG 2. At this point, and if the configuration data had not been received by the ACS and policies are not received at the HCPE, the HCPE may use default or pre-installed traffic distribution policies existing at the HCPE or received from previous interactions with the ACS.

The reception of traffic from the HCPE 3 at the HAG 2, during step S-950, triggers a step S-260 wherein the HAG engages in a Gx session establishment with the PCRF 1, as per 3GPP TS 29.213, but with the exception that there is no bearer establishment. During this step, the PCRF 1 may transmit to the HAG 2 the corresponding dynamic or pre-defined policies that will trigger the downlink traffic distribution at the HAG.

Further, during step S-970, the PCRF 1 may optionally be triggered to transmit a further SOAP notification towards the ACS 4 to trigger a corresponding further remote HCPE configuration, such as for updating a previous policy, or for installing or removal of a previous policy. This process is similar as the one described during step S-930. Likewise, the ACS 4 behaves as during step S-940, builds a corresponding TR-069 message and transmits the TR-069 message to the HCPE 3 during step S-980.

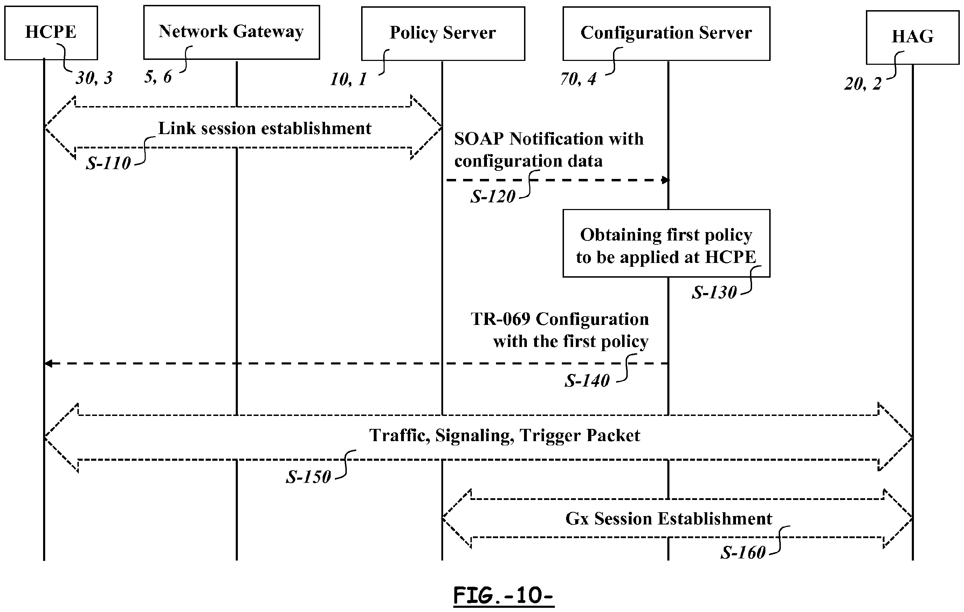

An embodiment for an overall method of controlling policies for accesses to a core network, through a fixed network and a mobile network, for the HCPE, is further discussed with reference to Fig. 10. This embodiment does not distinguish between using the mobile link or the fixed link because the actions are substantially similar, or the same.

As illustrated in Fig. 10, during step S-110, the HCPE 3 or 30 establishes a communication session with a network gateway through at least one of the fixed network 40 and the mobile network 50. In particular, where the communication session is established through the fixed network, the network gateway is the BNG 6 illustrated in e.g. Fig. 2; and, where the communication session is established through the mobile network, the network gateway is the PGW 5 illustrated in e.g. Fig. 2.

As part of the communication session establishment during step S-110, the network gateway 5 or 6 transmits to the policy server 1 or 10, and the policy server receives, information about the communication session to be established for the HCPE. Also during step S-110, the policy server may obtain, if not already available at the policy server, configuration data 71 or 72 for the HCPE based on the information about the communication session received from the network gateway and/or subscription data obtained from a subscription profile repository, SPR, as disclosed on 3GPP TS 23.203.

The policy server transmits toward a configuration server 4 or 70, during step S-120, the configuration data 71 or 72 to obtain a first policy to be applied at the HCPE to trigger traffic distribution at the HCPE. In this respect, any one of the embodiments discussed above with reference to Fig. 5a and Fig. 5b may be applied for this transmission.

That is, in a first embodiment, the configuration data 72, transmitted from the policy server and received at the configuration server, may comprise the first policy to be applied at the HCPE and the configuration server directly obtains the first policy amongst the received configuration data; whereas, in a second embodiment, the configuration data 71, transmitted from the policy server and received at the configuration server, may comprise subscription data for the HCPE. In this second embodiment, the method may further comprise using, during step S-130, the subscription data 71 to obtain, at the configuration server from a data repository, the first policy to be applied at the HCPE and associated with the subscription data at the data repository.

Alternatively in a third embodiment, during step S-120, the policy server may transmit instead, toward a configuration server 4 or 70, subscription data 71 or 72 for the HCPE, the subscription data associated with a first policy to be applied at the HCPE to trigger traffic distribution at the HCPE. In this embodiment, the policy server may or may not transmit to the configuration server the first policy 72 associated with the subscription data and to be applied at the HCPE. When the first policy is not transmitted, the first policy is associated with the subscription data at a data repository, and the method may further comprise using, during step S-130, the subscription data 71 to obtain, at the configuration server from the data repository, the first policy associated with the subscription data.

In any one of these embodiment, any transmission, from the policy server to the configuration server, may be carried out with a SOAP notification following the communication details already discussed above.

The configuration server obtains, during step S-130, the first first policy to be applied at the HCPE. In this respect, as for the policy server, any one of the embodiments discussed above with reference to Fig. 5a and Fig. 5b are also applicable for the configuration server to obtain the first first policy to be applied at the HCPE.

Once the first policy is obtained, the configuration server installs to the HCPE 3 or 30, during step S-140, the first policy to trigger traffic distribution at the HCPE. In an embodiment, this first policy may be enforced to trigger uplink traffic distribution at the HCPE. In an embodiment, any policy to trigger traffic distribution at the HCPE may be installed, from the configuration server to the HCPE, with a configuration message in accordance with a so-called TR-069 protocol or Customer Premises Equipment, CPE, WAN Management Protocol, CWMP.

Then, traffic addressing the core network may be sent, during step S-150, from the HCPE to the HAG 2 or 20.

Upon receiving this traffic at the HAG, a protocol session, e.g. 3GPP Gx session, may be established during step S-160 between the HAG and the policy server. As part of this protocol session establishment during step S-160, the policy server may install to the HAG a second policy to be applied at the HAG to trigger traffic distribution at the HAG. In an embodiment, this second policy is installed to trigger downlink traffic distribution at the HAG.

Aligned with the exemplary method step S-920 discussed above with reference to Fig. 9, also this method illustrated in Fig. 10, as part of the communication session establishment during step S-110, may further comprise a step of installing, from the policy server to the network gateway 5 or 6, a third policy with redirection information indicating a HCPE traffic redirection towards the HAG, and whereby the traffic addressing the core network and received at the network gateway is redirected to the HAG. In particular, this third policy may be installed to trigger uplink traffic distribution at the network gateway 5 or 6.

Moreover, even if not illustrated in any drawing, this method may further comprise obtaining, by the configuration server, a fourth policy to be applied at the HCPE; and installing, from the configuration server, the fourth policy to the HCPE. In particular, this fourth policy may be a further policy to be applied at the HCPE to trigger downlink traffic distribution at the HCPE, or an update policy to update traffic distribution at the HCPE.

Derived from the overall exemplary methods discussed above with reference to Fig. 9 and Fig. 10, the skilled person may arrive to corresponding specific methods respectively carried out by the HCPE 3 or 30, the policy server 1 or 10, and the configuration server 4 or 70.

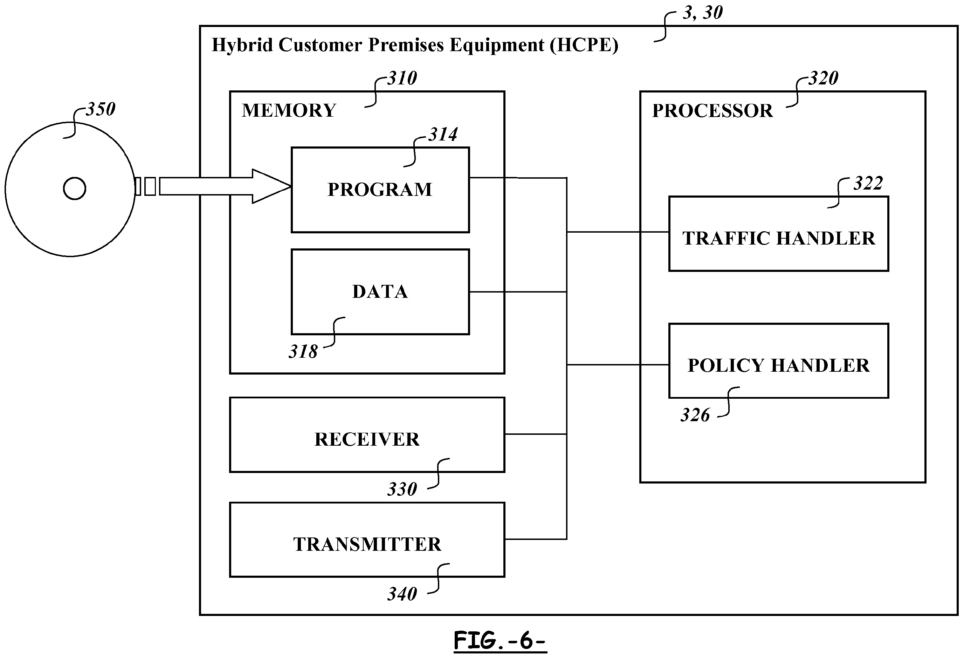

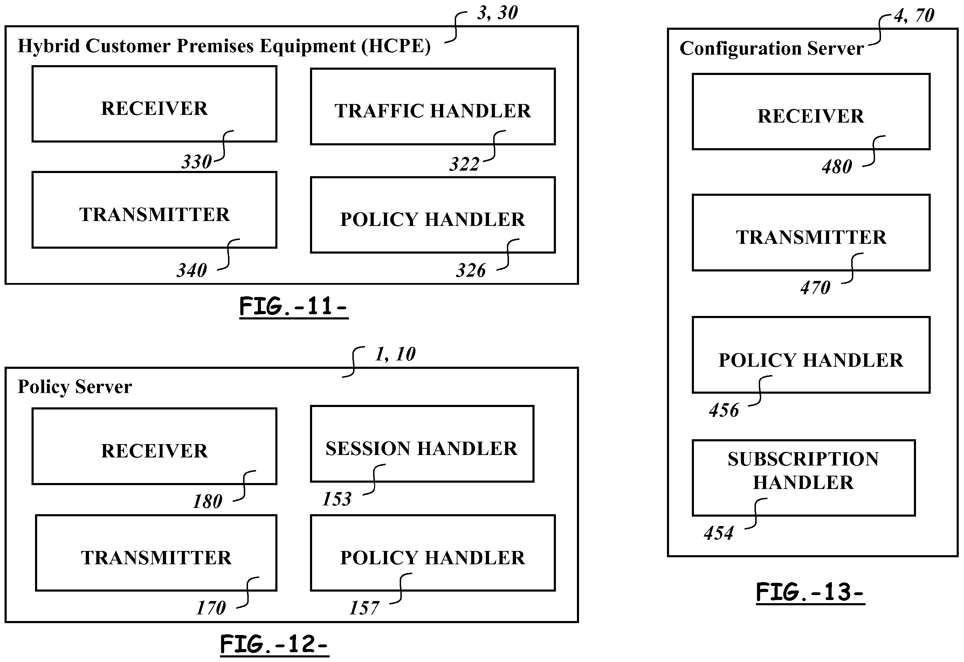

The HCPE 3 or 30, the policy server 1 or 10, and the configuration server 4 or 70 are respectively illustrated in Fig. 6, Fig. 7 and Fig. 8, in accordance with an embodiment, and in Fig. 11, Fig. 12 and Fig. 13, in accordance with another embodiment.

In accordance with an embodiment, the HCPE 3 or 30 may comprise, as shown in Fig. 6, at least one processor 320, and at least one memory 310 that stores processor-executable instructions 314. In this HCPE, the at least one processor interfaces with the at least one memory to execute the processor-executable instructions, whereby the HCPE is operable to perform the actions disclosed in the following.

The HCPE 3 or 30 is thus operable to: establish a communication session, with a network gateway 5 or 6 via transmitter 340 and receiver 330, through at least one of the fixed network 40 and the mobile network 50; receive, from a configuration server 4 or 70 via receiver 330, a policy to be applied at the HCPE to trigger traffic distribution; enforce, with processor 320, the policy to be applied at the HCPE; and transmit, to a HAG 2 or 20 via transmitter 340, traffic addressing the core network 60 based on the received policy.

In particular, a traffic handler 322 running in a processor 320 may handle the establishment of the communication session and the traffic addressing the core network, and a policy handler 326 also running in the processor 320 may handle the reception and enforcement of policies to trigger traffic distribution. Also in particular, this policy may be enforced to trigger uplink traffic distribution at the HCPE.

In an embodiment, the HCPE 3 or 30 may further be operable to receive, from the configuration server 4 or 70 via the receiver 330, a further policy to be applied at the HCPE, and to enforce with the processor 320 the further policy. This further policy may be enforced with the processor 320 to trigger downlink traffic distribution at the HCPE, or to update traffic distribution at the HCPE.

If required at all, the HCPE 3 or 30 may be complemented with a data section 318 in memory to store any policy to be applied at the HCPE, any communication session data and/or addressing data.

The HCPE 3 or 30 illustrated in Fig. 6 may thus comprise the at least one processor 320 and the at least one memory 310, both in communication with each other, with the traffic handler 322, the policy handler 326, the receiver 330 and the transmitter 340, and with other elements or units of the HCPE 3 or 30. The at least one memory 310 may comprise volatile and/or non-volatile memory. In particular, the at least one memory 310 may have a computer program 314 and data 318 stored therein. The computer program 314 may be loaded in the at least one memory 310 from a computer program product 350, such as any non-transitory computer readable medium, in which the computer program is stored. The at least one processor 320 may be configured to carry out the functions of the traffic handler 322 and the policy handler 326.

In accordance with another embodiment, the HCPE 3 or 30 may comprise, as shown in Fig. 11, a traffic handler 322 configured to establish a communication session with a network gateway 5 or 6, via the transmitter 340 and the receiver 330, through at least one of the fixed network 40 and the mobile network 50, and configured to transmit, towards the HAG 2 or 20 via the transmitter 340, traffic addressing the core network 60 based on a policy received to trigger traffic distribution.

Also in accordance with the embodiment illustrated in Fig. 11, the HCPE 3 or 30 may comprise a policy handler 326 configured to receive, from a configuration server 4 or 70 via the receiver 330, a policy to be applied at the HCPE to trigger traffic distribution, and configured to enforce the policy to trigger traffic distribution. In particular, this policy may be enforced to trigger uplink traffic distribution at the HCPE.

Still in this embodiment illustrated in Fig. 11, the policy handler 326 may further be configured to receive, from the configuration server 4 or 70 via the receiver 330, a further policy to be applied at the HCPE. This further policy may be enforced by the policy handler 326 to trigger downlink traffic distribution at the HCPE, or to update traffic distribution at the HCPE.

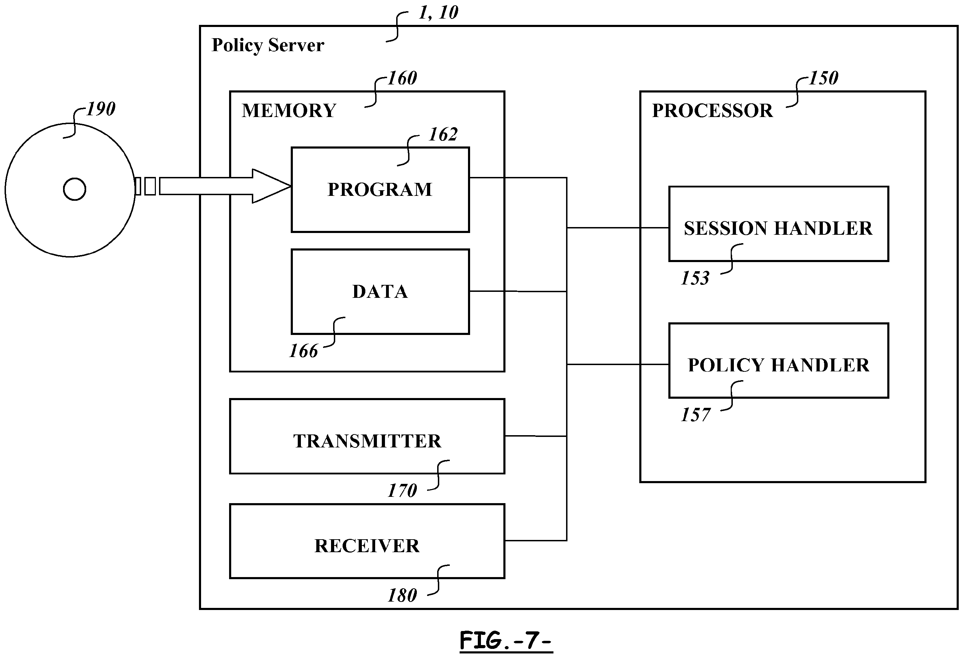

Fig. 7 illustrates a basic component structure of a policy server 1 or 10 in accordance with an embodiment. This policy server may comprise, as shown in Fig. 7, at least one processor 150, and at least one memory 160 that stores processor-executable instructions 162. In this policy server, the at least one processor interfaces with the at least one memory to execute the processor-executable instructions, whereby the policy server is operable to perform the actions disclosed in the following.

The policy server 1 or 10 is thus operable to: receive, from a network gateway 5 or 6 via receiver 180, information about a communication session established by a HCPE 3 or 30 through at least one of the fixed network 40 and the mobile network 50; transmit, to a configuration server 4 or 70 via transmitter 170, configuration data 71 or 72 to obtain a first policy to be applied at the HCPE to trigger traffic distribution at the HCPE; establish, by a processor 150 via the transmitter 170 and the receiver 180, a protocol session, e.g. a Gx session, with a HAG 2 or 20 for the HCPE; and install, to the HAG via the transmitter 170, a second policy to be applied at the HAG to trigger traffic distribution at the HAG.

In particular, a session handler 153 running in a processor 150 may handle the information about the communication session established by the HCPE 3 or 30 through at least one of the fixed network 40 and the mobile network 50, and may also handle the establishment of the protocol session, e.g. a Gx session, with the HAG 2 or 20 for the HCPE.

Also in particular, a policy handler 157 running in the processor 150 may handle the configuration data 71 or 72 to obtain the first policy to be applied at the HCPE to trigger traffic distribution at the HCPE, and may handle the second policy to be applied at the HAG to trigger traffic distribution at the HAG.

As sufficiently disclosed above when discussing the overall method, the configuration data transmitted from the policy server 1 or 10 to the configuration server 4 or 70 may follow the scheme illustrated in any one of Fig. 5a or Fig. 5b. That is, the configuration data 71 may comprise subscription data, as illustrated in Fig. 5a, to be used by the configuration server to obtain the first policy to be applied at the HCPE and associated with the subscription data at a data repository; or the configuration data 72 may directly comprise the first policy to be applied at the HCPE.

In other words, the policy server 1 or 10 may transmit to the configuration server 4 or 70 subscription data associated with the first policy at a data repository, which is accessible to the configuration server to obtain the first policy, or may directly transmit the first policy to be applied at the HCPE.

In particular, the first policy may be generated by the processor 150 to trigger uplink traffic distribution at the HCPE. Also in particular, the second policy may be installed to trigger downlink traffic distribution at the HAG.

In an embodiment, the policy server 1 or 10 may further be operable to install, to the network gateway 5 or 6 via the transmitter 170, a third policy with redirection information indicating a HCPE traffic redirection towards the HAG, and whereby the traffic addressing the core network and received at the network gateway is redirected to the HAG. In particular, this third policy may be installed to trigger uplink traffic distribution at the network gateway 5 or 6.

If required at all, the policy server 1 or 10 may be complemented with a data section 166 in memory to store any policy to be applied at the HCPE, any communication session data and/or any subscription data.

The policy server 1 or 10 illustrated in Fig. 7 may thus comprise the at least one processor 150 and the at least one memory 160, both in communication with each other, with the session handler 153, the policy handler 157, the receiver 180 and the transmitter 170, and with other elements or units of the policy server 1 or 10. The at least one memory 160 may comprise volatile and/or non-volatile memory. In particular, the at least one memory 160 may have a computer program 162 and data 166 stored therein. The computer program 162 may be loaded in the at least one memory 160 from a computer program product 190, such as any non-transitory computer readable medium, in which the computer program is stored. The at least one processor 150 may be configured to carry out the functions of the session handler 153 and the policy handler 157.

In accordance with another embodiment, the policy server 1 or 10 may comprise, as shown in Fig. 12, a session handler 153 configured to receive, from a network gateway 5 or 6 via receiver 180, information about a communication session established by a HCPE 3 or 30 through at least one of the fixed network 40 and the mobile network 50, and configured to establish, via the transmitter 170 and the receiver 180, a protocol session, e.g. a Gx session, with a HAG 2 or 20 for the HCPE.

Also in accordance with the embodiment illustrated in Fig. 12, the policy server 1 or 10 may comprise a policy handler 157 configured to transmit, to a configuration server 4 or 70 via transmitter 170, configuration data 71 or 72 to obtain a first policy to be applied at the HCPE to trigger traffic distribution at the HCPE, and configured to install, to the HAG via the transmitter 170, a second policy to be applied at the HAG to trigger traffic distribution at the HAG.

In particular, the first policy may be generated by the policy handler 157 to trigger uplink traffic distribution at the HCPE. Also in particular, the second policy may be installed by the policy handler 157 via the transmitter 170 to trigger downlink traffic distribution at the HAG.

In an embodiment, the policy handler 157 may further be configured to install, to the network gateway 5 or 6 via the transmitter 170, a third policy with redirection information indicating a HCPE traffic redirection towards the HAG, and whereby the traffic addressing the core network and received at the network gateway is redirected to the HAG. In particular, this third policy may be installed to trigger uplink traffic distribution at the network gateway 5 or 6.

As anticipated above for the embodiment illustrated in Fig. 7, also in the embodiment illustrated in Fig. 12, the configuration data transmitted from the policy handler 157 to the configuration server 4 or 70 may follow the scheme illustrated in any one of Fig. 5a or Fig. 5b. That is, the configuration data 71 may comprise subscription data, as illustrated in Fig. 5a, to be used by the configuration server to obtain the first policy to be applied at the HCPE and associated with the subscription data at a data repository; or the configuration data 72 may directly comprise the first policy to be applied at the HCPE.

In other words, the policy handler 157 may transmit to the configuration server 4 or 70 subscription data associated with the first policy at a data repository, which is accessible to the configuration server to obtain the first policy, or may directly transmit the first policy to be applied at the HCPE.

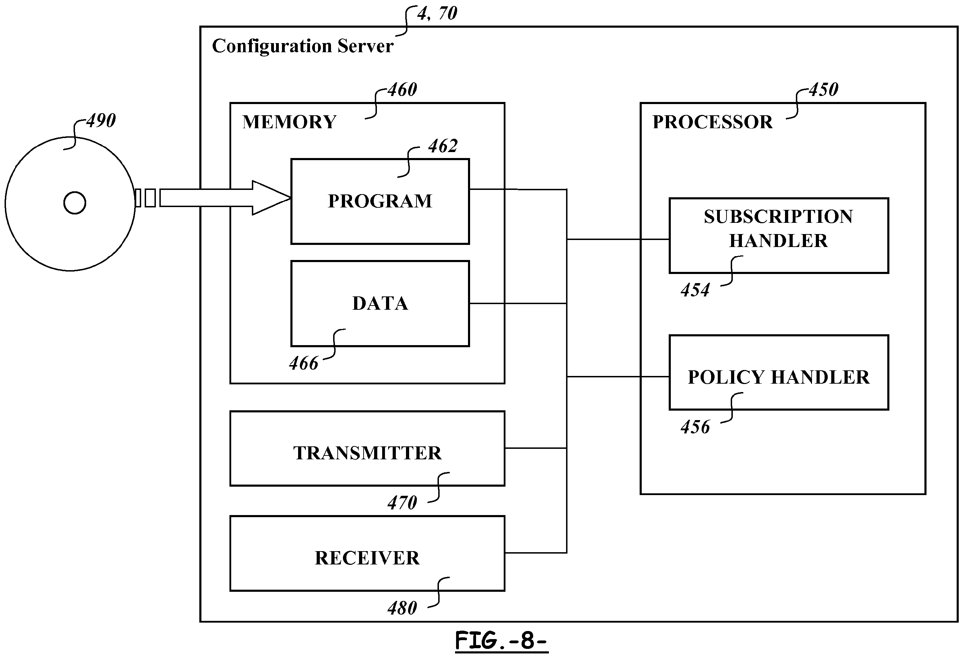

Fig. 8 illustrates a basic component structure of a configuration server 4 or 70 in accordance with an embodiment. This configuration server may comprise, as shown in Fig. 8, at least one processor 450, and at least one memory 460 that stores processor-executable instructions 462. In this configuration server, the at least one processor interfaces with the at least one memory to execute the processor-executable instructions, whereby the configuration server is operable to perform the actions disclosed in the following.

The configuration server 4 or 70 is thus operable to: receive, from a policy server 1 or 10 via receiver 480, configuration data 71 or 72 to obtain a policy to be applied at the HCPE 3 or 30 to trigger traffic distribution at the HCPE; obtain, by processor 450 and by using the received configuration data, the policy to be applied at the HCPE; and install, to the HCPE via transmitter 470, the obtained policy to be applied at the HCPE to trigger traffic distribution at the HCPE.

Aligned with the transmission from the policy server, the configuration data received at the configuration server 4 or 70 from the policy server 1 or 10 may follow the scheme illustrated in any one of Fig. 5a or Fig. 5b. That is, the configuration data 71 may comprise subscription data, as illustrated in Fig. 5a, to be used by the configuration server to obtain the policy to be applied at the HCPE and associated with the subscription data at a data repository; or the configuration data 72 may directly comprise the policy to be applied at the HCPE.

In other words, the configuration server 4 or 70 may receive from the policy server 1 or 10 subscription data associated with the policy at a data repository, which is accessible to the configuration server to obtain the policy, or may directly receive, from the policy server, the policy to be applied at the HCPE.

In particular, when only subscription data 71 is received at the configuration server from the policy server, a subscription handler 454 running in a processor 450 may obtain, by using the received configuration data 71, the policy to be applied at the HCPE to trigger traffic distribution at the HCPE; whereas, when the policy 72 to be applied at the HCPE is received at the configuration server from the policy server, a policy handler 456 running in the processor 450 may directly obtain the policy to be applied at the HCPE to trigger traffic distribution at the HCPE.

Irrespective of having or not having received the policy to be applied at the HCPE, the policy handler 456 running in the processor 450 may handle the reception of the configuration data 71 or 72, transmitted from the policy server 1 or 10, and may handle the installation of the obtained policy to be applied at the HCPE to trigger traffic distribution at the HCPE. In particular, the policy may be installed by the policy handler 456 to trigger uplink traffic distribution at the HCPE.

In an embodiment, the configuration server 4 or 70 may further be operable to install, to the HCPE 3 or 30 via the transmitter 470, a further policy to be applied at the HCPE. This further policy may be installed to trigger downlink traffic distribution at the HCPE, or to update traffic distribution at the HCPE.

If required at all, the configuration server 4 or 70 may be complemented with a data section 466 in memory to store any policy to be applied at the HCPE and/or any subscription data.

The configuration server 4 or 70 illustrated in Fig. 8 may thus comprise the at least one processor 450 and the at least one memory 460, both in communication with each other, with the subscription handler 454, the policy handler 456, the receiver 480 and the transmitter 470, and with other elements or units of the configuration server 4 or 70. The at least one memory 460 may comprise volatile and/or non-volatile memory. In particular, the at least one memory 460 may have a computer program 462 and data 466 stored therein. The computer program 462 may be loaded in the at least one memory 460 from a computer program product 490, such as any non-transitory computer readable medium, in which the computer program is stored. The at least one processor 450 may be configured to carry out the functions of the subscription handler 454 and the policy handler 456.

In accordance with another embodiment, the configuration server 4 or 70 may comprise, as shown in Fig. 13, a policy handler 456 configured to receive, from a policy server 1 or 10 via receiver 480, configuration data 71 or 72 to obtain a policy to be applied at the HCPE to trigger traffic distribution at the HCPE, and configured to install, to the HCPE via transmitter 470, the obtained policy to be applied at the HCPE to trigger traffic distribution at the HCPE. In particular, the obtained policy may be installed by the policy handler 456 to trigger uplink traffic distribution at the HCPE.

As already commented above, the configuration data 71 may comprise subscription data, as illustrated in Fig. 5a, to be used by the configuration server to obtain the policy to be applied at the HCPE and associated with the subscription data at a data repository; or the configuration data 72 may directly comprise the policy to be applied at the HCPE. So that the policy is directly obtained from the policy server.

When only subscription data 71 is received from the policy server, the configuration server 4 or 70 may further comprise, as shown in Fig. 13, a subscription handler 454 configured to obtain, by using the received subscription data 71 and from a data repository, the policy to be applied at the HCPE and associated with the subscription data at the data repository; whereas, when the policy 72 to be applied at the HCPE is received from the policy server, the policy handler 456 is configured to directly obtain the policy to be applied at the HCPE.

In an embodiment, the policy handler 456 may further be configured to install, to the HCPE 3 or 30 via the transmitter 470, a further policy to be applied at the HCPE. This further policy may be installed to trigger downlink traffic distribution at the HCPE, or to update traffic distribution at the HCPE.

The invention may also be practised by one or more computer programs, loadable into an internal memory of one or more computers with one or more processors. The one or more computer programs comprise instructions executable by the one or more processors to carry out the above methods. In particular, the computer programs may be recorded in carriers readable in a computer.

For the sake of explanatory and non-limiting purposes, a number of exemplary embodiments are disclosed in the following.

Embodiment 1. A method of controlling policies for simultaneous accesses to a core network through a fixed network and a mobile network for a hybrid customer premises equipment (HCPE), the method comprising the steps of:
establishing, by the HCPE, a first communication (e.g. PPPoE) session through the fixed network with a fixed network gateway (e.g. MS-BNG);
establishing, by the HCPE, a second communication (e.g. IP-CAN) session through the mobile network with a mobile network gateway (e.g. P-GW);
receiving, at a policy server (e.g. PCRF server) from the mobile network gateway, information about the second communication session;
obtaining, by the policy server, subscription data for the HCPE and sending the subscription data to a configuration server (e.g. ACS, RDM);
obtaining, by the configuration server, a first policy to be applied at the HCPE;
installing, from the configuration server, the first policy to the HCPE;
sending, from the HCPE to a Hybrid Access Gateway (HAG), traffic addressing the core network;
establishing a Gx session, by the HAG with the policy server, for the HCPE; and
installing, from the policy server, a second policy to the HAG.

Embodiment 2. The method of embodiment 1, wherein sending the subscription data to the configuration server comprises sending the first policy to be applied at the HCPE.

Embodiment 3. The method of any one of embodiments 1 or 2, wherein the subscription data are sent to the configuration server with a SOAP notification.

Embodiment 4. The method of any one of embodiments 1 to 3, wherein the first policy is installed to the HCPE with a configuration message in accordance with TR-069 or CPE WAN Management Protocol (CWMP).

Embodiment 5. The method of any one of embodiments 1 to 4, further comprising sending, from the policy server to the mobile network gateway, a third policy with redirection information indicating HCPE traffic redirection towards the HAG, and wherein the traffic addressing the core network is received at the mobile network gateway and redirected to the HAG.

Embodiment 6. The method of any one of embodiments 1 to 5, wherein the second policy is installed to trigger downlink traffic distribution at the HAG.

Embodiment 7. The method of any one of embodiments 1 to 6, wherein the first policy is installed to trigger uplink traffic distribution at the HCPE.

Embodiment 8. The method of any one of embodiments 1 to 7, further comprising: obtaining, by the configuration server, a fourth policy to be applied at the HCPE, and installing, from the configuration server, the fourth policy to the HCPE, wherein the fourth policy is installed to trigger downlink traffic distribution at the HCPE.

Embodiment 9. A policy server for controlling policies for simultaneous accesses by a hybrid customer premises equipment (HCPE) to a core network through a fixed network and a mobile network, the policy server comprising:
a receiver configured to receive, from a mobile network gateway (e.g. P-GW), information about a communication session established with the HCPE;
the receiver being configured to obtain, from a subscription profile repository (SPR), subscription data for the HCPE;
a transmitter configured to send the subscription data to a configuration server (ACS, RDM);
a processor configured to establish a Gx session with a Hybrid Access Gateway (HAG) and determine a first policy to be applied by the HAG; and
the transmitter being configured to install the first policy to the HAG.

Embodiment 10. The policy server of embodiment 9, wherein the transmitter is configured to send the subscription data along with a second policy to be applied at the HCPE.

Embodiment 11. The policy server of any one of embodiments 9 or 10, wherein the transmitter is configured to send the subscription data to the configuration server with a SOAP notification.

Embodiment 12. The policy server of any one of embodiments 9 to 11, wherein the transmitter is configured to send, to the mobile network gateway, a third policy with redirection information indicating HCPE traffic redirection towards the HAG.

Embodiment 13. A hybrid customer premises equipment (HCPE) for simultaneous accesses to a core network through a fixed network and a mobile network, the HCPE comprising:
a transmitter configured to establish a first communication session (e.g. PPPoE) through the fixed network with a fixed network gateway (e.g. MS-BNG);
the transmitter being configured to establish a second communication session (e.g. IP-CAN) through the mobile network with a mobile network gateway (e.g. P-GW);
a receiver configured to receive, from a configuration server, a policy to be applied;
a processor configured to install and apply the policy; and
the transmitter being configured to send, to a Hybrid Access Gateway (HAG), traffic addressing the core network in accordance with the policy.

Embodiment 14. A configuration server (e.g. ACS, RDM) for controlling policies for simultaneous accesses to a core network through a fixed network and a mobile network for a hybrid customer premises equipment (HCPE), the configuration server comprising:
a receiver configured to receive, from a policy server (e.g. PCRF server), subscription data for the HCPE;
the receiver being configured to obtain a policy to be applied at the HCPE; and
a transmitter configured to send, to the HCPE, the policy to be applied.

Embodiment 15. The configuration server of embodiment 14, wherein the receiver is configured to receive, from the policy server, the policy to be applied at the HCPE along with the subscription data.

Embodiment 16. The configuration server of embodiment 14, wherein the receiver is configured to obtain the policy to be applied at the HCPE from a data repository accessible to the configuration server.

Embodiment 17. The configuration server of any one of embodiments 14 to 16, wherein the receiver is configured to receive the subscription data with a SOAP notification.

Embodiment 18. The configuration server of any one of embodiments 14 to 17, wherein the transmitter is configured to send the policy to be applied at the HCPE with a configuration message in accordance with TR-069 or CPE WAN Management Protocol (CWMP).

Embodiment 19. A computer program, comprising instructions which, when executed on at least one processor, cause the at least one processor to carry out the method according to any one of embodiments 1 to 8.

Embodiment 20. A computer program product comprising the computer program of embodiment 19.

The invention is described above in connection with various embodiments that are intended to be illustrative and non-restrictive. It is expected that those of ordinary skill in this art may modify these embodiments. The scope of the invention is defined by the claims in conjunction with the description and drawings, and all modifications that fall within the scope of the claims are intended to be included therein.

## Claims

1. A method of controlling policies for accesses to a core network (60), through a fixed network (40) and a mobile network (50), for a hybrid customer premises equipment (3, 30), HCPE, the method carried out by the HCPE (3, 30) and comprising:
establishing (S-110) a communication session, by the HCPE with a network gateway (5, 6), through at least one of the fixed network (40) and the mobile network (50);
receiving (S-140) from a configuration server, and enforcing (S-140) at the HCPE, a policy to be applied at the HCPE to trigger traffic distribution at the HCPE; and
transmitting (S-150), to a Hybrid Access Gateway (2, 20), HAG, traffic addressing the core network (60) based on the received policy.

2. A method of controlling policies for accesses to a core network (60), through a fixed network (40) and a mobile network (50), for a hybrid customer premises equipment (3, 30), HCPE, the method carried out by a policy server (1, 10) and comprising:
receiving (S-110), from a network gateway (5, 6), information about a communication session established by the HCPE through at least one of the fixed network (40) and the mobile network (50);
transmitting (S-120), to a configuration server (4, 70), subscription data (71, 72) for the HCPE, the subscription data associated with a first policy to be applied at the HCPE to trigger traffic distribution at the HCPE;
establishing (S-160) a protocol (3GPP Gx) session, between the policy server and a Hybrid Access Gateway (2, 20), HAG, for the HCPE; and
installing (S-160), to the HAG, a second policy to be applied at the HAG to trigger traffic distribution at the HAG.

3. A method of controlling policies for accesses to a core network (60), through a fixed network (40) and a mobile network (50), for a hybrid customer premises equipment (3, 30), HCPE, the method carried out by a configuration server (4, 70) and comprising:
receiving (S-120), from a policy server (1, 10), subscription data (71, 72) for the HCPE, the subscription data associated with a policy to be applied at the HCPE to trigger traffic distribution at the HCPE;
obtaining (S-130), at the configuration server, the policy associated with the subscription data and to be applied at the HCPE; and
installing (S-140) the policy, from the configuration server to the HCPE, to trigger traffic distribution at the HCPE.

4. A hybrid customer premises equipment (3, 30), HCPE, for accesses to a core network (60) through a fixed network (40) and a mobile network (50), the HCPE comprising:
at least one processor (320); and
at least one memory (310) that stores processor-executable instructions (314), wherein the at least one processor interfaces with the at least one memory to execute the processor-executable instructions, whereby said HCPE is operable to:
establish a communication session, by the HCPE with a network gateway (5, 6) via a transmitter (340) and a receiver (330), through at least one of the fixed network (40) and the mobile network (50);
receive, from a configuration server (4, 70) via a receiver (330), a policy to be applied at the HCPE to trigger traffic distribution;
enforce, with a processor (320), the policy to be applied at the HCPE; and
transmit, to a Hybrid Access Gateway (2, 20), HAG, via the transmitter (340), traffic addressing the core network (60) based on the received policy.

5. The HCPE of claim 4, wherein the received policy is enforced to trigger uplink traffic distribution at the HCPE.

6. The HCPE of any one of claims 4 or 5, further operable to:
receive, from the configuration server (4, 70) via the receiver (330), a further policy to be applied at the HCPE; and
enforce, with the processor (320), the further policy to trigger downlink traffic distribution at the HCPE.

7. A policy server (1, 10) for controlling policies for accesses by a hybrid customer premises equipment (3, 30), HCPE, to a core network (60) through a fixed network (40) and a mobile network (50), the policy server comprising:
at least one processor (150); and
at least one memory (160) that stores processor-executable instructions (162), wherein the at least one processor interfaces with the at least one memory to execute the processor-executable instructions, whereby said policy server is operable to:
receive, from a network gateway (5, 6) via a receiver (180), information about a communication session established by the HCPE through at least one of the fixed network (40) and the mobile network (50);
transmit, to a configuration server (4, 70) via a transmitter (170), subscription data (71, 72) for the HCPE, the subscription data associated with a first policy to be applied at the HCPE to trigger traffic distribution at the HCPE;
establish, by a processor (150) via the transmitter (170) and the receiver (180), a protocol (3GPP Gx) session with a Hybrid Access Gateway (2, 20), HAG, for the HCPE; and
install, to the HAG (2, 20) via the transmitter (170), a second policy to be applied at the HAG to trigger traffic distribution at the HAG.

8. The policy server of claim 7, further operable to transmit, to the configuration server (4, 70) via the transmitter (170), the first policy (72) associated with the subscription data and to be applied at the HCPE.

9. The policy server of claim 8, wherein the first policy is generated by the processor (150) to trigger uplink traffic distribution at the HCPE.

10. The policy server of any one of claims 7 to 9, wherein the second policy is installed to trigger downlink traffic distribution at the HAG.

11. The policy server of any one of claims 7 to 10, further operable to install, to the network gateway (5, 6) via the transmitter (170), a third policy with redirection information indicating a HCPE traffic redirection towards the HAG, and whereby the traffic addressing the core network and received at the network gateway is redirected to the HAG.

12. A configuration server (4, 70) for controlling policies for accesses to a core network (60) through a fixed network (40) and a mobile network (5) for a hybrid customer premises equipment (3, 30), HCPE, the configuration server comprising:
at least one processor (450); and
at least one memory (460) that stores processor-executable instructions (462), wherein the at least one processor interfaces with the at least one memory to execute the processor-executable instructions, whereby said configuration server is operable to:
receive, from a policy server (1, 10) via a receiver (480), subscription data (71, 72) for the HCPE, the subscription data associated with a policy to be applied at the HCPE to trigger traffic distribution at the HCPE;
obtain, by a processor (450), the policy associated with the subscription data and to be applied at the HCPE; and
install, to the HCPE via a transmitter (470), the obtained policy to be applied at the HCPE to trigger traffic distribution at the HCPE.

13. The configuration server of claim 12, further operable to:
receive, from the policy server via the receiver (480), the policy associated with the subscription data (72) and to be applied at the HCPE; or
use the subscription data (71) to obtain, by the processor (450) from the data repository, the policy to be applied at the HCPE and associated with the subscription data at the data repository.

14. The configuration server of any one of claims 12 or 13, wherein the obtained policy is installed to trigger uplink traffic distribution at the HCPE.

15. The configuration server of any one of claims 12 to 14, further operable to install, to the HCPE via the transmitter (470), a further policy to be applied at the HCPE to trigger downlink traffic distribution at the HCPE.

16. A computer program (314, 162, 462), comprising instructions which, when executed on at least one processor (320, 150, 450), cause the at least one processor to carry out the method according to any one of claims 1 to 3.

## Patentansprüche

1. Verfahren zur Steuerung von Richtlinien für Zugänge zu einem Kernnetzwerk (60) durch ein Festnetzwerk (40) und ein Mobilnetzwerk (50) für eine hybride Teilnehmereinrichtung, HCPE, (3, 30) wobei das Verfahren von der HCPE (3, 30) durchgeführt wird und umfasst:
Aufbauen (S-110) einer Kommunikationssitzung durch die HCPE mit einem Netzwerk-Gateway (5, 6) durch mindestens eines von dem Festnetzwerk (40) und dem Mobilnetzwerk (50);
Empfangen (S-140) einer Richtlinie an der HCPE, die an der HCPE zum Auslösen von Verkehrsverteilung an der HCPE angewendet werden soll, von einem Konfigurationsserver (S-140); und
Senden (S-150) von Verkehr, der an das Kernnetzwerk (60) adressiert ist, basierend auf der empfangenen Richtlinie an ein hybrides Zugangs-Gateway, HAG, (2, 20) .

2. Verfahren zur Steuerung von Richtlinien für Zugänge zu einem Kernnetzwerk (60) durch ein Festnetzwerk (40) und ein Mobilnetzwerk (50) für eine hybride Teilnehmereinrichtung, HCPE, (3, 30), wobei das Verfahren von einem Richtlinienserver (1, 10) durchgeführt wird und umfasst:
Empfangen (S-110) von Informationen über eine Kommunikationssitzung, die von der HCPE durch mindestens eines von dem Festnetzwerk (40) und dem Mobilnetzwerk (50) aufgebaut wird, von einem Netzwerk-Gateway (5, 6) ;
Senden (S-120) von Subskriptionsdaten (71, 72) für die HCPE an einen Konfigurationsserver (4, 70), wobei die Subskriptionsdaten mit einer ersten Richtlinie assoziiert sind, die an der HCPE zum Auslösen von Verkehrsverteilung an der HCPE angewendet werden soll;
Aufbauen (S-160) einer Protokoll (3GPP Gx)-Sitzung zwischen dem Richtlinienserver und einem hybriden Zugangs-Gateway, HAG, (2, 20) für die HCPE; und
Installieren (S-160) für das HAG einer zweiten Richtlinie, die am HAG zum Auslösen von Verkehrsverteilung am HAG angewendet werden soll.

3. Verfahren zur Steuerung von Richtlinien für Zugänge zu einem Kernnetzwerk (60) durch ein Festnetzwerk (40) und ein Mobilnetzwerk (50) für eine hybride Teilnehmereinrichtung, HCPE, (3, 30), wobei das Verfahren von einem Konfigurationsserver (4, 70) durchgeführt wird und umfasst:
Empfangen (S-120) von Subskriptionsdaten (71, 72) für die HCPE von einem Richtlinienserver (1, 10), wobei die Subskriptionsdaten mit einer ersten Richtlinie assoziiert sind, die an der HCPE zum Auslösen von Verkehrsverteilung an der HCPE angewendet werden soll;
Abrufen (S-130) der Richtlinie, die mit den Subskriptionsdaten assoziiert ist und an der HCPE angewendet werden soll, am Konfigurationsserver; und
Installieren (S-140) der Richtlinie vom Konfigurationsserver für die HCPE zum Auslösen von Verkehrsverteilung an der HCPE.

4. Hybride Teilnehmereinrichtung, HCPE, (3, 30) für Zugänge zu einem Kernnetzwerk (60) durch ein Festnetzwerk (40) und ein Mobilnetzwerk (50), wobei die HCPE umfasst:
mindestens einen Prozessor (320); und
mindestens einen Speicher (310), der prozessorausführbare Anweisungen (314) speichert, wobei der mindestens eine Prozessor mit dem mindestens einen Speicher über eine Schnittstelle verbunden ist, um die prozessorausführbaren Anweisungen auszuführen, wodurch die HCPE ausgelegt ist zum:
Aufbauen einer Kommunikationssitzung durch die HCPE mit einem Netzwerk-Gateway (5, 6) über einen Sender (340) und einen Empfänger (330) durch mindestens eines von dem Festnetzwerk (40) und dem Mobilnetzwerk (50);
Empfangen einer Richtlinie, die an der HPCE zum Auslösen von Verkehrsverteilung angewendet werden soll, über einen Empfänger (330) von einem Konfigurationsserver (4, 70);
Durchsetzen der an der HCPE anzuwendenden Richtlinie mit einem Prozessor (320); und
Senden von Verkehr, der an das Kernnetzwerk (60) adressiert ist, basierend auf der empfangenen Richtlinie über den Sender (340) an ein hybrides Zugangs-Gateway, HAG, (2, 20).

5. The HCPE nach Anspruch 4, wobei die empfangene Richtlinie zum Auslösen von Uplink-Verkehrsverteilung an der HCPE durchgesetzt wird.

6. HCPE nach einem der Ansprüche 4 oder 5, ferner ausgelegt zum:
Empfangen einer weiteren Richtlinie, die an der HPCE angewendet werden soll, über einen Empfänger (330) von einem Konfigurationsserver (4, 70);
Durchsetzen der weiteren Richtlinie mit dem Prozessor (320) zum Auslösen von Downlink-Verkehrsverteilung an der HCPE.

7. Richtlinienserver (1, 10) zum Steuern von Richtlinien für Zugänge durch eine hybride Teilnehmereinrichtung, HCPE, (3, 30) zu einem Kernnetzwerk (60) durch ein Festnetzwerk (40) und ein Mobilnetzwerk (50), wobei der Richtlinienserver umfasst:
mindestens einen Prozessor (150); und
mindestens einen Speicher (160), der prozessorausführbare Anweisungen (162) speichert, wobei der mindestens eine Prozessor mit dem mindestens einen Speicher über eine Schnittstelle verbunden ist, um die prozessorausführbaren Anweisungen auszuführen, wodurch der Richtlinienserver ausgelegt ist zum:
Empfangen von Informationen über eine Kommunikationssitzung, die von der HCPE durch mindestens eines von dem Festnetzwerk (40) und dem Mobilnetzwerk (50) aufgebaut wird, über einen Empfänger (180) von einem Netzwerk-Gateway (5, 6);
Senden von Subskriptionsdaten (71, 72) für die HCPE über einen Sender (170) an einen Konfigurationsserver (4, 70), wobei die Subskriptionsdaten mit einer ersten Richtlinie assoziiert sind, die an der HCPE zum Auslösen von Verkehrsverteilung an der HCPE angewendet werden soll;
Aufbauen einer Protokoll (3GPP Gx)-Sitzung mit einem hybriden Zugangs-Gateway, HAG, (2, 20) für die HCPE durch einen Prozessor (150) über den Sender (170) und den Empfänger (180); und
Installieren für das HAG (2, 20) einer zweiten Richtlinie, die am HAG zum Auslösen von Verkehrsverteilung am HAG angewendet werden soll, über den Sender (170).

8. Richtlinienserver nach Anspruch 7, der ferner so ausgelegt ist, dass er die erste Richtlinie (72), die mit den Subskriptionsdaten assoziiert ist und an der HCPE angewendet werden soll, über den Sender (170) an den Konfigurationsserver (4, 70) sendet.

9. Richtlinienserver nach Anspruch 8, wobei die erste Richtlinie vom Prozessor(150) zum Auslösen von Uplink-Verkehrsverteilung an der HCPE erzeugt wird.

10. Richtlinienserver nach einem der Ansprüche 7 bis 9, wobei die zweite Richtlinie zum Auslösen von Downlink-Verkehrsverteilung an der HCPE installiert wird.

11. Richtlinienserver nach einem der Ansprüche 7 bis 10, der ferner so ausgelegt ist, dass er eine dritte Richtlinie mit Umleitungsinformationen, die eine HCPE-Verkehrsumleitung zum HAG anzeigen, für das Netzwerk-Gateway (5, 6) über den Sender (170) installiert, und wodurch der an das Kernnetzwerk adressierte und am Netzwerk-Gateway empfangene Verkehr zum HAG umgeleitet wird.

12. Konfigurationsserver (4, 70) zum Steuern von Richtlinien für Zugänge zu einem Kernnetzwerk (60) durch ein Festnetzwerk (40) und ein Mobilnetzwerk (5) für eine hybride Teilnehmereinrichtung, HCPE, (3, 30), wobei der Konfigurationsserver (4, 70) umfasst:
mindestens einen Prozessor (450); und
mindestens einen Speicher (460), der prozessorausführbare Anweisungen (462) speichert, wobei der mindestens eine Prozessor mit dem mindestens einen Speicher über eine Schnittstelle verbunden ist, um die prozessorausführbaren Anweisungen auszuführen, wodurch der Konfigurationsserver ausgelegt ist zum:
Empfangen von Subskriptionsdaten (71, 72) für die HCPE über einen Sender (480) von einem Richtlinienserver (1, 10), wobei die Subskriptionsdaten mit einer Richtlinie assoziiert sind, die an der HCPE zum Auslösen von Verkehrsverteilung an der HCPE angewendet werden soll;
Abrufen der Richtlinie, die mit den Subskriptionsdaten assoziiert ist und an der HCPE angewendet werden soll, durch einen Prozessor (450); und
Installieren für die HCPE der abgerufenen Richtlinie, die an der HPCE zum Auslösen von Verkehrsverteilung an der HPCE angewendet werden soll, über einen Sender (470) .

13. Konfigurationsserver nach Anspruch 12, ferner ausgelegt zum:
Empfangen der Richtlinie, die mit den Subskriptionsdaten (72) assoziiert ist und an der HCPE angewendet werden soll, über den Empfänger (480) vom Richtlinienserver; und
Verwenden der Subskriptionsdaten (71) zum Abrufen durch den Prozessor (450) vom Daten-Repository der Richtlinie, die an der HCPE angewendet werden soll und mit den Subskriptionsdaten am Daten-Repository assoziiert.

14. Konfigurationsserver nach einem der Ansprüche 12 oder 13, wobei die abgerufene Richtlinie zum Auslösen von Uplink-Verkehrsverteilung an der HCPE installiert wird.

15. Konfigurationsserver nach einem der Ansprüche 12 bis 14, der ferner so ausgelegt ist, dass er für die HCPE über den Sender (470) eine weitere Richtlinie installiert, die an der HCPE zum Auslösen von Downlink-Verkehrsverteilung an der HCPE angewendet werden soll.

16. Computerprogramm (314, 162, 462), umfassend Anweisungen, welche bei Ausführung auf mindestens einem Prozessor (320, 150, 450) den mindestens einen Prozessor zum Durchführen des Verfahrens nach einem der Ansprüche 1 bis 3 veranlassen.

## Revendications

1. Procédé de commande de politiques pour des accès à un réseau central (60), par l'intermédiaire d'un réseau fixe (40) et d'un réseau mobile (50), pour un équipement de local de client hybride, HCPE, (3, 30), le procédé étant effectué par le HCPE (3, 30) et comprenant :
l'établissement (S-110) d'une session de communication, par le HCPE avec une passerelle de réseau (5, 6), par l'intermédiaire d'au moins l'un du réseau fixe (40) et du réseau mobile (50) ;
la réception (S-140), en provenance d'un serveur de configuration, et l'exécution (S-140), au HCPE, d'une politique à appliquer au HCPE pour déclencher une distribution de trafic au HCPE ; et
la transmission (S-150), à une passerelle d'accès hybride, HAG, (2, 20), d'un trafic adressant le réseau central (60) sur la base de la politique reçue.

2. Procédé de commande de politiques pour des accès à un réseau central (60), par l'intermédiaire d'un réseau fixe (40) et d'un réseau mobile (50), pour un équipement de local de client hybride, HCPE, (3, 30), le procédé étant effectué par un serveur de politiques (1, 10) et comprenant :
la réception (S-110), en provenance d'une passerelle de réseau (5, 6), d'informations relatives à une session de communication établie par le HCPE par l'intermédiaire d'au moins l'un du réseau fixe (40) et du réseau mobile (50) ;
la transmission (S-120), à destination d'un serveur de configuration (4, 70), de données d'abonnement (71, 72) pour le HCPE, les données d'abonnement étant associées à une première politique à appliquer au HCPE pour déclencher une distribution de trafic au HCPE ;
l'établissement (S-160) d'une session de protocole (3GPP Gx), entre le serveur de politiques et une passerelle d'accès hybride, HAG, (2, 20), pour le HCPE ; et
l'installation (S-160), à la HAG, d'une deuxième politique à appliquer à la HAG pour déclencher une distribution de trafic à la HAG.

3. Procédé de commande de politiques pour des accès à un réseau central (60), par l'intermédiaire d'un réseau fixe (40) et d'un réseau mobile (50), pour un équipement de local de client hybride, HCPE, (3, 30), le procédé étant effectué par un serveur de configuration (4, 70) et comprenant :
la réception (S-120), en provenance d'un serveur de politiques (1, 10), de données d'abonnement (71, 72) pour le HCPE, les données d'abonnement étant associées à une politique à appliquer au HCPE pour déclencher une distribution de trafic au HCPE ;
l'obtention (S-130), au serveur de configuration, de la politique associée aux données d'abonnement et à appliquer au HCPE ; et
l'installation (S-140) de la politique, du serveur de configuration au HCPE, pour déclencher une distribution de trafic au HCPE.

4. Equipement de local de client hybride, HCPE, (3, 30) pour des accès à un réseau central (60) par l'intermédiaire d'un réseau fixe (40) et d'un réseau mobile (50), le HCPE comprenant :
au moins un processeur (320) ; et
au moins une mémoire (310) qui mémorise des instructions exécutables par processeur (314), dans lequel l'au moins un processeur est en interface avec l'au moins une mémoire pour exécuter les instructions exécutables par processeur, de telle manière que ledit HCPE soit utilisable pour effectuer :
l'établissement d'une session de communication, par le HCPE avec une passerelle de réseau (5, 6) par le biais d'un émetteur (340) et d'un récepteur (330), par l'intermédiaire d'au moins l'un du réseau fixe (40) et du réseau mobile (50) ;
la réception, en provenance d'un serveur de configuration (4, 70) par le biais d'un récepteur (330), d'une politique à appliquer au HCPE pour déclencher une distribution de trafic ;
l'exécution, avec un processeur (320), de la politique à appliquer au HCPE ; et
la transmission, à une passerelle d'accès hybride, HAG, (2, 20) par le biais de l'émetteur (340), d'un trafic adressant le réseau central (60) sur la base de la politique reçue.

5. HCPE selon la revendication 4, dans lequel la politique reçue est exécutée pour déclencher une distribution de trafic de liaison montante au HCPE.

6. HCPE selon l'une quelconque des revendications 4 et 5, utilisable en outre pour effectuer :
la réception, en provenance du serveur de communication (4, 70) par le biais du récepteur (330), d'une autre politique à appliquer au HCPE ; et
l'exécution, avec le processeur (320), de l'autre politique pour déclencher une distribution de trafic de liaison descendante au HCPE.

7. Serveur de politiques (1, 10) pour commander des politiques pour des accès par un équipement de local de client hybride, HCPE, (3, 30) à un réseau central (60), par l'intermédiaire d'un réseau fixe (40) et d'un réseau mobile (50), le serveur de politiques comprenant :
au moins un processeur (150) ; et
au moins une mémoire (160) qui mémorise des instructions exécutables par processeur (162), dans lequel l'au moins un processeur est en interface avec l'au moins une mémoire pour exécuter les instructions exécutables par processeur, de telle manière que ledit serveur de politiques soit utilisable pour effectuer :
la réception, en provenance d'une passerelle de réseau (5, 6) par le biais d'un récepteur (180), d'informations relatives à une session de communication établie par le HCPE par l'intermédiaire d'au moins l'un du réseau fixe (40) et du réseau mobile (50) ;
la transmission, à destination d'un serveur de configuration (4, 70) par le biais d'un émetteur (170), de données d'abonnement (71, 72) pour le HCPE, les données d'abonnement étant associées à une première politique à appliquer au HCPE pour déclencher une distribution de trafic au HCPE ;
l'établissement, par un processeur (150) par le biais de l'émetteur (170) et du récepteur (180), d'une session de protocole (3GPP Gx) avec une passerelle d'accès hybride, HAG, (2, 20), pour le HCPE ; et
l'installation, à la HAG (2, 20) par le biais de l'émetteur (170), d'une deuxième politique à appliquer à la HAG pour déclencher une distribution de trafic à la HAG.

8. Serveur de politiques selon la revendication 7, utilisable en outre pour transmettre, à destination du serveur de configuration (4, 70) par le biais de l'émetteur (170), la première politique (72) associée aux données d'abonnement et à appliquer au HCPE.

9. Serveur de politiques selon la revendication 8, dans lequel la première politique est générée par le processeur (150) pour déclencher une distribution de trafic de liaison montante au HCPE.

10. Serveur de politiques selon l'une quelconque des revendications 7 à 9, dans lequel la deuxième politique est installée pour déclencher une distribution de trafic de liaison descendante à la HAG.

11. Serveur de politiques selon l'une quelconque des revendications 7 à 10, utilisable en outre pour effectuer l'installation, à la passerelle de réseau (5, 6) par le biais de l'émetteur (170), d'une troisième politique avec des informations de redirection indiquant une redirection de trafic HCPE vers la HAG, et de telle manière que le trafic adressant le réseau central et reçu à la passerelle de réseau soit redirigé vers la HAG.

12. Serveur de configuration (4, 70) pour commander des politiques pour des accès à un réseau central (60), par l'intermédiaire d'un réseau fixe (40) et d'un réseau mobile (5) pour un équipement de local de client hybride, HCPE, (3, 30), le serveur de configuration comprenant :
au moins un processeur (450) ; et
au moins une mémoire (460) qui mémorise des instructions exécutables par processeur (462), dans lequel l'au moins un processeur est en interface avec l'au moins une mémoire pour exécuter les instructions exécutables par processeur, de telle manière que ledit serveur de configuration soit utilisable pour effectuer :
la réception, en provenance d'un serveur de politiques (1, 10) par le biais d'un récepteur (480), de données d'abonnement (71, 72) pour le HCPE, les données d'abonnement étant associées à une politique à appliquer au HCPE pour déclencher une distribution de trafic au HCPE ;
l'obtention, par un processeur (450), de la politique associée aux données d'abonnement et à appliquer au HCPE ; et
l'installation, au HCPE par le biais d'un émetteur (470), de la politique obtenue à appliquer au HCPE pour déclencher une distribution de trafic au HCPE.

13. Serveur de configuration selon la revendication 12, utilisable en outre pour effectuer :
la réception, en provenance du serveur de politiques par le biais du récepteur (480), de la politique associée aux données d'abonnement (72) et à appliquer au HCPE ; ou
l'utilisation des données d'abonnement (71) pour obtenir, par le processeur (450) à partir du répertoire de données, la politique à appliquer au HCPE et associée aux données d'abonnement au répertoire de données.

14. Serveur de configuration selon l'une quelconque des revendications 12 et 13, dans lequel la politique obtenue est installée pour déclencher une distribution de trafic de liaison montante au HCPE.

15. Serveur de configuration selon l'une quelconque des revendications 12 à 14, utilisable en outre pour installer, au HCPE par le biais de l'émetteur (470), une autre politique à appliquer au HCPE pour déclencher une distribution de trafic de liaison descendante au HCPE.

16. Programme informatique (314, 162, 462), comprenant des instructions qui, lorsqu'elles sont exécutées sur au moins un processeur (320, 150, 450), amènent l'au moins un processeur à effectuer le procédé selon l'une quelconque des revendications 1 à 3.
